(19) 

Europäisches
Patentamt
European
Patent Office
Office européen
des brevets

(11)  **EP 4 780 034 A1**

(12)  **EUROPEAN PATENT APPLICATION**
published in accordance with Art. 153(4) EPC

(43) Date of publication:
**22.07.2026  Bulletin 2026/30**

(21) Application number: **23951718.8**

(22) Date of filing: **11.09.2023**

(51) International Patent Classification (IPC):
**H04W 12/03** (2021.01)

(52) Cooperative Patent Classification (CPC):
**H04W 12/03**

(86) International application number:
**PCT/CN2023/118039**

(87) International publication number:
**WO 2025/054770 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **LI, Meng
Dongguan, Guangdong 523860 (CN)**
• **GAN, Lu
Dongguan, Guangdong 523860 (CN)**
• **XIONG, Lihui
Dongguan, Guangdong 523860 (CN)**
• **SHI, Cong
Dongguan, Guangdong 523860 (CN)**

(74) Representative: **RGTH
Patentanwälte PartGmbB
Mönckebergstraße 11
20095 Hamburg (DE)**

(54)  **COMMUNICATION METHOD, AND DEVICE**

(57)  The present application relates to a communication method, a device, a computer-readable storage medium, a computer program product and a computer program. The method comprises: generating a sensing reference signal on the basis of a first reference signal sequence, wherein the first reference signal sequence is obtained by means of encrypting a reference signal sequence on the basis of a shared key; and sending the sensing reference signal, wherein the sensing reference signal is used for obtaining sensing measurement data.

```
Generate a sensing reference signal based on a first reference signal sequence, where    ⌐ S210
the first reference signal sequence is obtained by encrypting a reference signal
sequence based on the shared key

                                          ↓

Send the sensing reference signal, where the sensing reference signal is used to obtain   ⌐ S220
sensing measurement data
```

FIG. 2

EP 4 780 034 A1

**Description**

**TECHNICAL FIELD**

The present disclosure relates to the field of communication, and more specifically, to a communication method, a device, a computer-readable storage medium, a computer program product and a computer program.

**BACKGROUND**

With the development of technologies, sensing has become a key technology, especially the introduction of the sensing technology into communication networks or communication systems has become a key technology of communication networks or communication systems, and there may be a plurality of sensing scenarios in communication networks or communication systems, which may include, for example, a scenario of a terminal and a base station sensing, a scenario of a terminal sensing, a scenario of a base station sensing, a scenario of coordination sensing of multiple sensing nodes, and so on. However, how to ensure the safety of a sensing reference signal while implementing sensing measurement has become a problem that needs to be solved.

**SUMMARY**

Embodiments of the present disclosure provide a communication method, a device, a computer-readable storage medium, a computer program product and a computer program.

The embodiments of the present disclosure provide a communication method performed by a first device, including:

generating a sensing reference signal based on a first reference signal sequence, where the first reference signal sequence is obtained by encrypting a reference signal sequence based on a shared key; and

sending the sensing reference signal, where the sensing reference signal is used to obtain sensing measurement data.

The embodiments of the present disclosure provide a communication method performed by a second device, including:

receiving an echo signal of a sensing reference signal; and

sending sensing measurement data, where the sensing measurement data is obtained based on an encryption reference signal and the echo signal of the sensing reference signal, the encryption reference signal is generated based on a second reference signal sequence, and the second reference signal sequence is obtained by encrypting a reference signal sequence based on a shared key.

The embodiments of the present disclosure provide a first device, including:

a first processing unit, configured to generate a sensing reference signal based on a first reference signal sequence, where the first reference signal sequence is obtained by encrypting a reference signal sequence based on a shared key; and

a first communication unit, configured to send the sensing reference signal, where the sensing reference signal is used to obtain sensing measurement data.

The embodiments of the present disclosure provide a second device, including:

a second communication unit, configured to receive an echo signal of a sensing reference signal; and send sensing measurement data, where the sensing measurement data is obtained based on an encryption reference signal and the echo signal of the sensing reference signal, the encryption reference signal is generated based on a second reference signal sequence, and the second reference signal sequence is obtained by encrypting a reference signal sequence based on a shared key.

The embodiments of the present disclosure provide a first device, including a transceiver, a processor and a memory. The memory is configured to store a computer program, and the processor is configured to call and run the computer program stored in the memory, so that the first device performs the above method.

The embodiments of the present disclosure provide a second device, including a transceiver, a processor and a memory. The memory is configured to store a computer program, and the processor is configured to call and run the computer program stored in the memory, so that the second device performs the above method.

The embodiments of the present disclosure provide a chip, configured to implement the above method.

Specifically, the chip includes: a processor, configured to call and run a computer program from a memory, so that a device equipped with the chip performs the above method.

The embodiments of the present disclosure provide a computer-readable storage medium configured to store a computer program, and the computer program, when run by a device, enables the device to perform the above method.

The embodiments of the present disclosure provide a computer program product, including computer program instructions, and the computer program instructions enable a computer to perform the above method.

The embodiments of the present disclosure provide a computer program that, when run on a computer, enables the computer to perform the above method.

By using the communication method provided in the embodiments, the first device side may encrypt the sensing reference sequence, generate and send an encrypted sensing reference signal, so that the second device may perform accurate channel estimation to obtain sensing measurement data by generating an encrypted sensing reference signal in the same way, and thus, the sending of the encrypted sensing reference signal can implement sensing measurement while resisting eavesdropping attacks and enhancing the security of the sensing reference signal.

## BRIEF DESCRIPTION OF THE DRAWINGS

FIG. 1 is a schematic diagram of an application scenario according to the embodiments of the present disclosure.

FIG. 2 is a schematic flowchart of a communication method according to an embodiment of the present disclosure.

FIG. 3 is a schematic flowchart of a communication method according to another embodiment of the present disclosure.

FIG. 4 is a schematic diagram of a downlink scenario of a communication method according to an embodiment of the present disclosure.

FIG. 5 is a schematic flowchart of a communication method in a downlink scenario according to an embodiment of the present disclosure.

FIG. 6 is a schematic flowchart of the generation of the sensing reference signal according to an embodiment of the present disclosure.

FIG. 7 is a schematic diagram of an uplink scenario of a communication method according to an embodiment of the present disclosure.

FIG. 8 is a schematic flowchart of a communication method in an uplink scenario according to an embodiment of the present disclosure.

FIG. 9 is a schematic diagram of a downlink group scenario of a communication method according to an embodiment of the present disclosure.

FIG. 10 is a processing flowchart of the communication method in a downlink group scenario according to an embodiment of the present disclosure.

FIG. 11 is a schematic diagram of a group uplink scenario of a communication method according to an embodiment of the present disclosure.

FIG. 12 is a processing flowchart of a communication method in a group uplink scenario according to an embodiment of the present disclosure.

FIG. 13 is a schematic diagram of a WIFI scenario of a communication method according to an embodiment of the present disclosure.

FIG. 14 is a processing flowchart of a communication method in a WIFI scenario according to an embodiment of the present disclosure.

FIG. 15a to FIG. 15c are multiple schematic diagrams of PPDU formats.

FIG. 16 is a schematic diagram of multiple sensing scenarios.

FIG. 17 is a schematic diagram of another sensing scenario.

FIG. 18 is a schematic flowchart of a sensing process.

FIG. 19 is a schematic block diagram of a first device according to an embodiment of the present disclosure.

FIG. 20 is a schematic block diagram of a second device according to an embodiment of the present disclosure.

FIG. 21 is a schematic block diagram of a communication device according to an embodiment of the present disclosure.

FIG. 22 is a schematic block diagram of a chip according to the embodiments of the present disclosure.

FIG. 23 is a schematic block diagram of a communication system according to the embodiments of the present disclosure.

**DETAILED DESCRIPTION**

Technical solutions of the embodiments of the present disclosure may be applied to various communication systems, for example: LTE (Long-Term Evolution), LTE-A (Long-Term Evolution Advanced), NR (New Radio), NR evolution, WLAN (Wireless Local Area Network), WiFi (Wireless Fidelity, WIFI), or other communication systems, etc.

The embodiments of the present disclosure describe various embodiments in conjunction with a network device and a terminal, where the terminal may be mobile or stationary, and the terminal may also be referred to as a mobile station, a user unit, etc. A terminal may be a station in a WLAN, or may be a terminal such as a smart terminal, a wireless modem, a laptop computer, a tablet computer, etc. In the embodiments of the present disclosure, the terminal may be a VR (Virtual Reality) terminal/AR (Augmented Reality) terminal, an industrial control terminal, an unmanned driving terminal, a telemedicine terminal, a smart grid terminal, a transportation safety terminal, a smart city terminal or a wireless terminal in a smart home, etc. As an example rather than a limitation, in the embodiments of the present disclosure, the terminal may also be a wearable device.

In the embodiments of the present disclosure, the network device may be a device for communicating with the terminal, and the network device may be an access point in WLAN, an evolved base station in LTE, or a relay station, or a vehicle-mounted device, a wearable device, and a network device (gNB) in an NR network, or a network device in a future evolved PLMN (Public Land Mobile Network) network, or a network device in a non-terrestrial network, etc. As an example rather than a limitation, in the embodiments of the present disclosure, the network device may have mobile characteristics, and for example, the network device may be a mobile device.

It should be understood that the terms "system" and "network" herein are often used interchangeably herein. The term "and/or" herein only describes the association relationship of associated objects, indicating that there may be three types of relationships, for example, A and/or B may represent three cases of: only A, both A and B, and only B. In addition, the character "/" herein generally represents that the associated objects before and after it are in an "or" relationship. It should be understood that the "indication" mentioned in the embodiments of the present disclosure may be a direct indication, an indirect indication, or may represent an association relationship. For example, if A indicates B, it may mean that A directly indicates B, for example, B may be acquired from A; it may also mean that A indirectly indicates B, for example, A indicates C, and B may be acquired from C; it may also mean that there is an association relationship between A and B. In the description of the embodiments of the present disclosure, the term "correspondence" may mean that there is a direct correspondence or indirect correspondence relationship between two items, or it may mean that there is an association relationship between the two, or it may be a relationship between indicating and being indicated, or between configuring and being configured, etc.

To facilitate the understanding of the technical solutions of the embodiments of the present disclosure, the related technologies of the embodiments of the present application are described below, and the following related technologies, as optional solutions, may be combined arbitrarily with the technical solutions of the embodiments of the present disclosure, which all fall within the protection scope of the embodiments of the present disclosure.

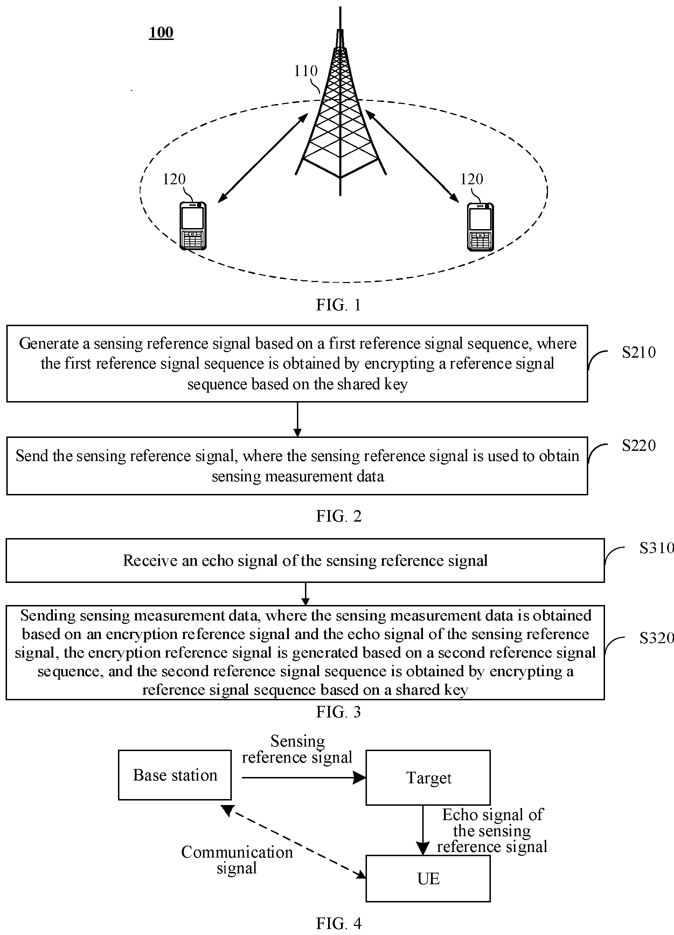

FIG. 1 exemplarily shows a communication system 100. This communication system includes a network device 110 and two terminals 120. In a possible implementation, the communication system 100 may include multiple network devices 110, and within a coverage range of each network device 110, there may be another number of terminals 120, which is not limited in the embodiments of the present disclosure. In a possible implementation, the communication system 100 may also include a mobility management entity, an access and mobility management function, and other network entities, which are not limited in the embodiments of the present disclosure. The network device may also include an access network device and a core network device. That is, the communication system may also include multiple core networks for communicating with the access network device. The access network device may be a base station of LTE, LTE-A, or NR systems. Taking the communication system shown in FIG. 1 as an example, the communication device may include a network device and terminals with communication functions, and the communication device may also include other devices in the communication system, such as a network controller, a mobility management entity and other network entities, which are not limited in the embodiments of the present disclosure.

FIG. 2 is a schematic flowchart of a communication method performed by a first device according to an embodiment of the present disclosure. The method includes at least some of the following contents:

S210: generating a sensing reference signal based on a first reference signal sequence, where the first reference signal sequence is obtained by encrypting a reference signal sequence based on a shared key; and
S220: sending the sensing reference signal, where the sensing reference signal is used to obtain sensing measurement data.

FIG. 3 is a schematic flowchart of a communication method performed by a second device according to another embodiment of the present disclosure. The method includes at least some of the following contents:

S310: receiving an echo signal of a sensing reference signal; and

S320: transmitting sensing measurement data, where the sensing measurement data is obtained based on an encryption reference signal and the echo signal of the sensing reference signal, the encryption reference signal is generated based on a second reference signal sequence, and the second reference signal sequence is obtained by encrypting a reference signal sequence based on a shared key.

In some possible implementations, the first device and the second device may be devices in a communication network (such as a mobile communication network or a cellular network). Specifically, the first device is an access network device, and the second device is a terminal.

In this implementation, the sensing reference signal is a downlink sensing reference signal, where the downlink sensing reference signal is one of: a channel state information reference signal (CSI-RS, CSI Reference Signal), a positioning reference signal (PRS), a demodulation reference signal (DMRS), a downlink data signal for sensing, and a downlink reference signal for sensing.

The positioning reference signal may specifically be a downlink positioning reference signal (DL-PRS, Down Link Positioning Reference Signal).

The downlink data signal for sensing may refer to a signal transmitted for sensing based on a downlink data channel or based on a downlink data channel for sensing, etc. The uplink data channel may include a PDSCH (physical downlink shared channel), etc., which is not limited here and may be exhaustive.

The downlink reference signal for sensing may refer to a downlink reference signal dedicated to sensing, that is, a downlink reference signal dedicated to sensing which is different from the CSI-RS, DL-PRS and DMRS, etc.

The first reference signal sequence is obtained by encrypting the reference signal sequence based on the shared key. The shared key is a key shared by the first device and the second device, where the second device is a device that receives the echo signal of the sensing reference signal. The shared key may be any one of: a pre-shared key (Pre-Shared Key, PSK) of the first device and the second device, a physical layer key generated by the first device and the second device, a key derived based on a root key shared by the first device and a gateway, a key derived based on a root key shared by the second device and a gateway, etc.

The reference signal sequence may be a noise sequence or a pseudo-noise (PN) sequence.

The pseudo-noise sequence may be generated by a pseudo-noise sequence generator.

Optionally, the pseudo-noise sequence may be a Gold sequence with a length of 31, and the pseudo-noise sequence may be referred to as a Gold-31 noise sequence, and there may be multiple modes to generate the pseudo-noise sequence.

In an example, it is assumed that the pseudo-noise sequence is represented as $c(i)$, and the pseudo-noise sequence $c(i)$ may be generated based on an initial value $c_{\text{init}}$; and the initial value $c_{\text{init}}$ may be calculated by:

$$ c_{\text{init}} = \left( 2^{17} \left( N_{\text{symb}}^{\text{slot}} n_{\text{s,f}}^{\mu} + l + 1 \right) \left( 2 N_{\text{ID}}^{\bar{n}_{\text{SCID}}^{\bar{\lambda}}} + 1 \right) + 2^{17} \left\lfloor \frac{\bar{\lambda}}{2} \right\rfloor + 2 N_{\text{ID}}^{\bar{n}_{\text{SCID}}^{\bar{\lambda}}} + \bar{n}_{\text{SCID}}^{\bar{\lambda}} \right) \bmod 2^{31}. $$

$n_{\text{s,f}}^{\mu}$ is a slot number in a frame; $\bar{n}_{\text{SCID}}^{\bar{\lambda}}$ may represent a high layer parameter scrambling ID (Scrambling ID), and may be configured by the high layer, $N_{\text{ID}}^{\bar{n}_{\text{SCID}}^{\bar{\lambda}}}$ is a scramble ID with a value related to $\bar{n}_{\text{SCID}}^{\bar{\lambda}}$, and for example, in the case where the value of $\bar{n}_{\text{SCID}}^{\bar{\lambda}}$ may be {0,1}, and the value of $N_{\text{ID}}^{\bar{n}_{\text{SCID}}^{\bar{\lambda}}}$ may be in {0,1,...,65535}, and for example, in the case where $\bar{n}_{\text{SCID}}^{\bar{\lambda}}$ is not configured, the value of $N_{\text{ID}}^{\bar{n}_{\text{SCID}}^{\bar{\lambda}}}$ may default to an ID of a cell; $l$ is a sequence number of an OFDM (Orthogonal frequency-division multiplex) symbol in the slot; $N_{\text{symb}}^{\text{slot}}$ is the number of symbols of each slot; $\bar{\lambda}$ may be defined by the high layer or configured by the high layer, which is not limited in this example; "mod" represents a modulo operation (or a modulo function).

The mode of generating the pseudo-noise sequence based on the initial value $c_{\text{init}}$ may be represented as follows:

$$ c(n) = (x_1(n + N_c) + x_2(n + N_c)) \bmod 2 $$

$$ x_1(n + 31) = (x_1(n + 3) + x_1(n)) \bmod 2 $$

$$x_2(n+31) = (x_2(n+3) + x_2(n+1) + x_2(n)) \bmod 2 \; ;$$

The value of $n$ may be 0 to 30; the initial value of $x_1(n)$ is 0; and the initial value of $x_2(n)$ is equal to the above-described $c_{\text{init}}$.

The above is merely an illustrative description for calculating the pseudo-noise sequence, and this embodiment does not limit and exhaust all possible modes of generating the pseudo-noise sequence.

It should be understood that the above is merely a possible mode of generating the pseudo-noise sequence, and in practical processing, other modes may also be used to generate the pseudo-random sequence, and this embodiment does not limit and exhaust all possible modes.

The encryption algorithm for encrypting the reference signal sequence may refer to a symmetric encryption algorithm and may include, for example, one of: AES (Advanced Encryption Standard), HASH Algorithm, SHA (Secure Hash Algorithm)-256, DES (Data Encryption Standard), 3DES (Triple Data Encryption Algorithm), etc.

Optionally, the first reference signal sequence is obtained by directly encrypting the reference signal sequence based on the shared key. Specifically, a mode by which the first device obtains the first reference signal sequence includes: using the encryption algorithm to encrypt and calculate the reference signal sequence based on the shared key, to obtain the first reference signal sequence. For example, it is assumed that the encryption algorithm is the AES algorithm and the reference signal sequence is a pseudo-noise sequence, the mode by which the first device calculates the first reference signal sequence may be represented as: $c'(i) = AES_K(c(i))$, where $c'(i)$ represents the first reference signal sequence, AES represents the AES algorithm, $K$ represents the shared key, and $c(i)$ represent the pseudo-noise sequence, and the meaning or the generating mode of $c(i)$ is the same as that of $c(n)$ in the previous example.

Optionally, the first reference signal sequence is obtained by encrypting the reference signal sequence based on a first key, where the first key is calculated based on the shared key.

The calculation mode used for calculating the first key based on the shared key may be pre-determined by the first device or default by the first device and the second device, and for example, the calculation mode may be a HASH algorithm or another algorithm, and this embodiment does not exhaust all possible modes.

Specifically, the mode by which the first device obtains the first reference signal sequence, includes: calculating the shared key to obtain the first key; encrypting and calculating the reference signal sequence based on the first key by using the encryption algorithm, to obtain the first reference signal sequence. For example, it is assumed that the encryption algorithm is the AES algorithm and the reference signal sequence is a pseudo-noise sequence, the mode by which the first device calculates the first reference signal sequence may be represented as: $c'(i) = AES_{K_P^1}(c(i))$, where $c'(i)$ represents the first reference signal sequence, AES represents the AES algorithm, $K_P^1$ represents the first key, and $c(i)$ represents the pseudo-noise sequence, and the meaning or the generating mode of $c(i)$ is the same as that of $c(n)$ in the previous example; the calculation of the first key may be represented as: $K_P^1 = HASH(K)$, where $HASH$ represents the HASH algorithm and $K$ represents the shared key.

Generating the sensing reference signal based on the first reference signal sequence may include: processing, by the first device, the first reference signal sequence, to generate the sensing reference signal.

The processing, by the first device, the first reference signal sequence, to generate the sensing reference signal, may include: processing, by the first device, the first reference signal sequence based on related configuration information of the sensing reference signal, to obtain the sensing reference signal.

The related configuration information of the sensing reference signal includes at least one of: a time-domain resource of the sensing reference signal, a frequency-domain resource of the sensing reference signal, a spatial domain resource of the sensing reference signal, and a sending mode of the sensing reference signal.

The time-domain resource of the sensing reference signal may be used to indicate a time-domain resource occupied by a downlink sensing reference signal.

The frequency-domain resource of the sensing reference signal may be used to indicate a frequency-domain resource occupied by a downlink sensing reference signal.

The spatial domain resource of the sensing reference signal may be used to indicate a spatial domain resource of a downlink sensing reference signal. The spatial domain resource may include at least one of a codeword, a layer (configuration), an antenna port, etc.

The sending mode of the sensing reference signal may include one of: the downlink sensing reference signal being periodically sent, the downlink sensing reference signal being semi-persistently sent, the downlink sensing reference signal being aperiodically sent, etc.

Optionally, the related configuration information of the sensing reference signal may also include at least one of: a repetition factor (Resource Repetition factor), a sending period, muting information (Muting pattern-pat), etc.

The repetition factor is used to indicate the number of resource repetitions of the sensing reference signal; for example, the resource (time-domain resource and/or frequency-domain resource) of the sensing reference signal may form a resource set, and the repetition factor is used to indicate the number of resource repetitions of each sensing reference signal in an instance of the resource set. The downlink sensing reference signal is specifically taken as a DL-PRS as an example, the repetition factor refers to how many times each DL-PRS resource is repeated, for an instance of the DL-PRS resource set.

The sending period may be configured in the case where the sending mode of the sensing reference signal is periodic sending.

The muting pattern-pat may indicate a resource position that is expected to not send the sensing reference signal; furthermore, the muting pattern-pat may specifically indicate a bitmap of time-domain positions (and/or frequency-domain positions) in which the sensing reference signal is expected not to be sent, at resources (such as time-domain resources and/or frequency-domain resources) that should send the sensing reference signal. The downlink sensing reference signal is specifically taken as a DL-PRS as an example, the muting pattern-pat refers to a bitmap of time positions in which DL PRS resources is expected not to send, for the DL PRS resource set.

By configuring the muting pattern-pat, interference may be reduced, and specifically, by configuring the muting pattern-pat, it may be controlled that the sensing reference signal is not sent at the time-frequency resource position in which the sensing reference signal should be sent, while other reference signals may be sent at the same time-frequency resource position or multiple TRPs send PRSs on the same time-frequency resource, so that it may reduce the interference to other reference signals, or PRSs sent by multiple TRPs on the same time-frequency resource.

Exemplarily, processing, by the first device, the first reference signal sequence based on the related configuration information of the sensing reference signal, to obtain the sensing reference signal, may refer to: performing, by the first device, at least one processing such as modulation, layer mapping, resource mapping, etc., on the first reference signal sequence, based on the related configuration information of the sensing reference signal, to obtain a downlink sensing reference signal. The using mode of the related configuration information of the sensing reference signal in the above processing is illustrated in an example as follows: the first device modulates the first reference signal sequence to obtain a modulated signal, and uses a spatial domain resource (such as layer (configuration)) of the sensing reference signal for layer mapping; multiplies data obtained by layer mapping by a precoding matrix, to complete the dimension conversion from layers to antenna ports; maps data corresponding to each antenna port onto a time-domain resource of the sensing reference signal and a frequency-domain resource of the sensing reference signal, to obtain I-path and Q-path modulated data; passes the I-path and Q-path modulated data through an OFDM waveform generator, to output two-path OFDM signals, and then sends out the two-path OFDM signals through antenna ports.

In the present disclosure, the signal received by the second device is referred to as the echo signal of the sensing reference signal, this is because the sensing reference signal sent from the first device will be reflected by a sensing target to obtain the echo signal, and the echo signal is the signal received by the second device, therefore, the echo signal of the sensing reference signal specifically refers to an echo signal generated from the sensing reference signal being reflected by the sensing target.

The processing of the second device after receiving the echo signal of the sensing reference signal, may include: encrypting the reference signal sequence based on the shared key to obtain the second reference signal sequence; and generating an encryption reference signal based on the second reference signal sequence.

Since the second device and the first device need to use the same generating mode to generate the same reference signal sequence, the mode of generating the reference signal sequence by the second device will not be repeated here.

Optionally, the second reference signal sequence is obtained by directly encrypting the reference signal sequence based on the shared key. Specifically, a method for the second device to calculate the second reference signal sequence includes: using an encryption algorithm to encrypt and calculate the reference signal sequence based on the shared key, to obtain the second reference signal sequence. For example, it is assumed that the encryption algorithm is the AES algorithm and the reference signal sequence is a pseudo-noise sequence $c(i)$, a mode by which the second device calculates the second reference signal sequence may be represented as: $c''(i) = AES_K(c(i))$, where $c''(i)$ represents the second reference signal sequence, and the meanings of the remaining contents are the same as those in the above embodiment and will not be repeated here.

Optionally, the second reference signal sequence is obtained by encrypting the reference signal sequence based on a second key, where the second key is calculated based on the shared key.

The calculation mode used for calculating the second key based on the shared key may be pre-configured by the first device to the second device (for example, which may be configured to the second device together with the encryption algorithm), or default by the first device and the second device; and for example, the calculation mode may be a HASH algorithm or another algorithm, and this embodiment does not exhaust all possible modes. It should be understood that in the embodiments of the present disclosure, different devices perform calculations on the shared key, respectively, therefore, in the present disclosure, for distinction, the key calculated from the shared key by the first device is referred to as the first key, and the key calculated from the shared key by the second device is referred to as the second key, and since the second device and the first device use the same calculation mode to calculate the same shared key, the first key and the second key should be the same, theoretically.

Specifically, the mode by which the second device obtains the first reference signal sequence, includes: calculating the shared key to obtain the second key; encrypting and calculating the reference signal sequence based on the second key by using the encryption algorithm, to obtain the second reference signal sequence. For example, it is assumed that the encryption algorithm is the AES algorithm and the reference signal sequence is a pseudo-noise sequence $c(i)$, the mode by which the second device calculates the second reference signal sequence may be represented as: $c''(i) = AES_{K_P^2}\left(c(i)\right)$, where $c''(i)$ represents the second reference signal sequence, $AES$ represents the AES algorithm, $K_P^2$ represents the second key, and $c(i)$ represents the pseudo - noise sequence, and the meaning or the generating mode of $c(i)$ is the same as that of $c(n)$ in the previous example; the calculation of the second key may be represented as: $K_P^2 = HASH(K)$, where $HASH$ represents the HASH algorithm, and $K$ represents the shared key.

It should be understood that in the above several examples, since different devices perform encryption calculations on the reference signal sequence, respectively, in the present disclosure, for distinction, the sequence encrypted and calculated from the reference signal sequence by the first device is referred to as the first reference signal sequence, and the sequence encrypted and calculated from the reference signal sequence by the second device is referred to as the second reference signal sequence, and since the second device and the first device use the same shared key and the same encryption mode to encrypt and calculate the same reference signal sequence, the first reference signal sequence and the second reference signal sequence should be the same, theoretically.

The above is only an exemplary illustration, and in the actual processing, this embodiment does not limit which mode the first device and the second device use to encrypt and calculate the reference signal sequence, as long as the first device and the second device use the same mode to encrypt and calculate the reference signal sequence, it falls within the protection scope of this embodiment.

Generating, by the second device, the encryption reference signal based on the second reference signal sequence, may include: performing, by the second device, at least one processing such as modulation, layer mapping, resource mapping, etc., on the second reference signal sequence, based on the related configuration information of the sensing reference signal, to obtain the encryption reference signal. The description of the specific processing mode by which the second device obtains the encryption reference signal, should be the same as that of the processing mode by which the first device obtains the sensing reference signal, and will not be repeated here. It should be noted that the encryption reference signal does not need to be sent, that is, the second device side may only need to just modulate and obtain an encryption reference signal to be sent.

The sensing measurement data on the second device side is obtained based on a channel estimation value, where the channel estimation value is calculated based on the encryption reference signal and the echo signal of the sensing reference signal. Specifically, in the second device, the processing after obtaining the encryption reference signal may also include: calculating the channel estimation value based on the encryption reference signal and the echo signal of the first sensing reference signal, and obtaining sensing measurement data based on the channel estimation value.

The calculation mode for calculating the channel estimation value based on the encryption reference signal and the echo signal of the first sensing reference signal may be set according to actual situations, and for example, may use the least square method, or the least mean square error method, etc., and all possible methods for channel estimation are not exhaustive or limited here.

For example, the sensing reference signal sent from the first device is represented as x(t); the echo signal received by the second device is y(t) = hx(t - $\tau$) + w(t), where h includes antenna gain, path loss, etc., $\tau$ represents time delay and w(t) represents additive Gaussian white noise. The calculation mode for the channel estimation value (or channel estimation result) is the least square method, for example, if a frequency-domain response of the echo signal y(t) is Y(k), k is the carrier, and a frequency-domain response of the encryption reference signal x'(t) is X'(k), then the channel estimation (channel estimation value or channel estimation result) is represented as $H(k) = \dfrac{Y(k)}{X'(k)}$.

The channel estimation value may be used to represent the loss in the signal transmission process, for example which may represent changes in phase and/or amplitude in the signal transmission process, and so on.

The sensing measurement data may include at least one of the following data types: a sensing final result, such as distance, speed, heartbeat, action of the sensing target, etc.; a sensing intermediate result, such as point cloud information, a delay-Doppler matrix, etc.; a sensing preliminary result, such as time delay, Doppler, angle, intensity, etc.; a sensing original result, such as the received signal (the echo signal of the sensing reference signal) or original channel information (such as at least one of a complex result, amplitude, phase, I-path/Q-path of the echo signal of the sensing reference signal or the channel response, etc., and related calculation results).

Optionally, in a case where the sensing measurement data includes the sensing original result, the mode by which the second device obtains the sensing measurement data may be: determining the sensing original result based on the channel estimation value, and taking the sensing original result as the sensing measurement data. For example, determining the sensing original result based on the channel estimation value may be at least one of: adjusting the received amplitude of the echo signal of the sensing reference signal based on the channel estimation value, to obtain the adjusted amplitude value, and adding the adjusted amplitude value to the sensing original result; adjusting the received phase of the echo signal of the sensing reference signal based on the channel estimation value, to obtain the adjusted phase value, and adding the adjusted phase value to the sensing original result; adjusting the complex result of the echo signal of the sensing reference signal based on the channel estimation value, to obtain the adjusted complex result, and adding the adjusted complex result to the sensing original result; directly adding the channel estimation value to the sensing original result; obtaining the complex result of the channel response based on the channel estimation value, and adding the complex result of the channel response to the sensing original result; obtaining the related information of the I-path and/or Q-path based on the channel estimation value (such as the related calculation result of I/Q, etc.), and adding the related information to the sensing original result, etc. All possible modes for determining the sensing original result are not limited or exhaustive here, as long as the sensing original result can be obtained based on the channel estimation value, which all fall within the protection scope of this embodiment.

Optionally, in a case where the sensing measurement data includes the sensing preliminary result, the mode by which the second device obtains the sensing measurement data may be: determining the sensing preliminary result based on the channel estimation value and taking the sensing preliminary result as the sensing measurement data. For example, determining the sensing preliminary result based on the channel estimation value may be: based on the channel estimation value, directly calculating at least one of the delay (such as transmission delay), Doppler (such as Doppler offset), angle (such as angle of arrival), intensity (such as receiving intensity), etc., as the sensing preliminary result; or, determining the sensing original result based on the channel estimation value, and based on the sensing original result, calculating at least one of the delay (such as transmission delay), Doppler (such as Doppler offset), angle (such as angle of arrival), intensity (such as receiving intensity), etc., as the sensing preliminary result.

Optionally, in a case where the sensing measurement data includes the sensing intermediate result, the mode by which the second device obtains the sensing measurement data may be: determining the sensing intermediate result based on the channel estimation value and taking the sensing intermediate result as the sensing measurement data. For example, determining the sensing intermediate result based on the channel estimation value may be: based on the channel estimation value, directly calculating at least one of the point cloud information, the delay-Doppler matrix, etc., as the sensing intermediate result; or, determining the sensing original result based on the channel estimation value, and based on the sensing original result, calculating at least one of the point cloud information, the delay-Doppler matrix, etc., as the sensing preliminary result; or, determining the sensing original result based on the channel estimation value, determining the sensing original result based on the channel estimation value, and based on the sensing original result, calculating at least one of the delay (such as transmission delay), Doppler (such as Doppler offset), angle (such as angle of arrival), intensity (such as receiving intensity), etc., as the sensing preliminary result, and based on the sensing preliminary result, calculating at least one of the point cloud information, the delay-Doppler matrix, etc., as the sensing intermediate result.

Optionally, in a case where the sensing measurement data includes the sensing final result, the mode by which the second device obtains the sensing measurement data may be: determining the sensing final result based on the channel estimation value, and taking the sensing final result as the sensing measurement data. For example, determining the sensing final result based on the channel estimation value may be: based on the channel estimation value, directly calculating at least one of the distance, speed, heartbeat, action of the sensing target, etc., as the sensing final result; or, determining the sensing original result based on the channel estimation value, and based on the sensing original result, calculating at least one of the distance, speed, heartbeat, action of the sensing target, etc., as the sensing final result; or determining the sensing original result based on the channel estimation value, determining the sensing original result based on the channel estimation value, and based on the sensing original result, calculating at least one of the delay (such as transmission delay), Doppler (such as Doppler offset), angle (such as angle of arrival), intensity (such as receiving intensity), etc., as the sensing preliminary result, and based on the sensing preliminary result, calculating at least one of the point cloud information, the delay-Doppler matrix, etc., as the sensing intermediate result, and based on the sensing intermediate result, calculating at least one of the distance, speed, heartbeat, action of the sensing target, etc., as the sensing final result.

After the second device obtains the sensing measurement data, it may also include: sending the sensing measurement data. Sending the sensing measurement data may refer to the second device sending the sensing measurement data to a sensing function entity.

The sensing function entity refers to a network element or a device that can perform sensing-related processing, and/or sensing-related services, and/or support sensing-related functions. The sensing function entity may be deployed in one of: an AF (Application Function), an SF (sensing network element, Sensing Function), a sensing client, and a client terminal (Client UE). In some possible examples, the SF may include an SF-C (sensing network element-control plane, Sensing Function-Control) and/or an SF-U (sensing network element-user plane, Sensing Function-User), and in this example, the sensing function entity may be deployed in the SF-C and/or the SF-U.

In this implementation, the second device is a terminal, and the first device may be an access network device, and correspondingly, the mode by which the terminal sends the sensing measurement data to the sensing function entity may be that: the terminal carries the sensing measurement data through a first message, and send the first message to the access network device, and the access network device sends the sensing measurement data to the sensing functional entity, where the first message may be any type of uplink AS(Access Stratum) signaling or message; or, the mode by which the terminal sends the sensing measurement data to the sensing function entity may be that: the terminal carries the sensing measurement data through a second message and sends the second message to the sensing function entity, where the second message may be any type of uplink NAS(Non Access Stratum) signaling or message. It should also be noted out that regarding a transmission protocol of the sensing measurement data, if the sensing measurement data includes original data (such as the aforementioned sensing original result with an extremely large data transmission volume) and/or intermediate measurements (such as the aforementioned sensing preliminary result and/or sensing intermediate result, and these two types of result have large data transmission volumes), it may be transmitted by the user plane; if the sensing measurement data includes the sensing result (such as the aforementioned sensing final result with a small data transmission volume), it may be transmitted by the control plane.

Before the first device sends the sensing reference signal and before the second device receives the echo signal of the sensing reference signal, the first device and the second device also need to determine or pre-configure the related configuration information.

In an embodiment, on the first device side, the encryption algorithm for encrypting the reference signal sequence is pre-determined. On the second device side, the encryption algorithm for encrypting the reference signal sequence may be pre-configured. Specifically, the encryption algorithm for encrypting the reference signal sequence on the second device side may be pre-configured by the first device to the second device.

The processing of the second device before pre-configuring the encryption algorithm also includes: reporting a capability of the second device to the first device. Before the first device determines the encryption algorithm, it may also include: receiving the capability of the second device.

The mode by which the first device determines the encryption algorithm may include that: the first device determines the encryption algorithm based on the capability of the second device; or, the first device determines the encryption algorithm based on a capability of the first device and the capability of the second device. The capability of the second device may include one or more optional encryption algorithms that the second device can support, and/or encryption algorithms that the second device can support as most, etc. The description of the capability of the first device is similar to that of the capability of the second device, and will not be repeated here. Regarding the mode by which the first device determines the encryption algorithm, it may be that the first device selects an encryption algorithm that both the second device and the first device itself can support, and there may be other modes by which the first device determines the encryption algorithm, which is not limited in this embodiment.

The processing of the first device may also include: sending an encryption algorithm for encrypting the reference signal sequence to the second device. Correspondingly, the processing of the second device may include: receiving the encryption algorithm for encrypting the reference signal sequence, configured by the first device.

In an embodiment, on the first device side, the related configuration information of the sensing reference signal is pre-determined. On the second device side, the related configuration information of the sensing reference signal is pre-configured; specifically, the related configuration information of the sensing reference signal on the second device side may be pre-configured by the first device to the second device.

The processing of the second device before pre-configuring the related configuration information of the sensing reference signal also includes: reporting a capability of the second device to the first device. Before the first device determines the related configuration information of the sensing reference signal, it may also include: receiving the capability of the second device.

The mode by which the first device determines the related configuration information of the sensing reference signal may include that: the first device determines the related configuration information of the sensing reference signal based on the capability of the second device; or, the first device determines the related configuration information of the sensing reference signal based on a capability of the first device and the capability of the second device.

The capability of the second device may also include a sensing capability of the second device.

The sensing capability of the second device includes at least one of: a supported sensing measurement result, a support for calculating a sensing result, a processing capability of receiving a sensing signal, an identification capability of a sensing target, a target type that can be sensed, a supported sensing precision, and a wireless capability.

The supported sensing measurement result may refer to a sensing measurement result supported or allowed by the second device, such as at least one of a measurement departure angle, angle of arrival, and delay; or, the supported sensing measurement result may refer to a range of sensing measurement results supported or allowed by the second device, such as at least one of a range of the measurement departure angle, a range of departure angle, a range of angle of arrival, and a range of delay.

The support for calculating a sensing result may refer to a sensing result supported or allowed to be calculated by the second device, and the sensing result may specifically refer to a type of the sensing result, such as at least one of the distance of the target (or sensing target), the speed of the target (or sensing target), the angle of the target (or sensing target), etc.

The processing capability of receiving a sensing signal (or sensing reference signal) may refer to the processing capability supported or allowed by the second device for receiving the sensing signal (or sensing reference signal), or may refer to the related processing capability supported or allowed by the second device for the sensing reference signal, for example, at least one of the maximum number of targets that can be sensed at the same time, the maximum distance that can be sensed, etc.

The identification capability of the sensing target or the target type that can be sensed, may refer to the identification capability for the sensing target or the target type that can be sensed, supported or allowed by the second device, for example, the support to sense certain specific target types only, where the specific target type may be at least one of a target region, and a target device, etc.

The wireless capability includes at least one of: a bandwidth for supporting signal transmission and reception, a processing capability for supporting signal transmission and reception, a supported beam scanning function, etc.

The description of the sensing capability of the first device is similar to that of the sensing capability of the second device mentioned above, so it will not be repeated.

The processing of the first device may also include: sending the related configuration information of the sensing reference signal to the second device. Correspondingly, the processing of the second device may include: receiving the related configuration information of the sensing reference signal configured by the first device.

Taking the first device as the access network device and the second device as the terminal for explanations, the terminal reports the capability of the terminal to the access network device; correspondingly, the access network device may, in combination with the capability of the terminal, determine the related configuration information of the sensing reference signal and the encryption algorithm, and then send the related configuration information of the sensing reference signal and the encryption algorithm to the terminal, so that the terminal may determine the same related configuration information of the sensing reference signal and the same encryption algorithm as the access network device.

In the above scenario, the related configuration information of the sensing reference signal and the encryption algorithm may be carried in the same information or message. For example, the access network device sends a third message to the terminal, and the third message carries the related configuration information of the sensing reference signal and the encryption algorithm, where the third message may be any type of downlink AS message, such as any one of Radio Resource Control (RRC) message, and Downlink Control Information (DCI), etc.

In the above scenario, the related configuration information of the sensing reference signal and the encryption algorithm may be carried in different information or messages. For example, the access network device sends a third message to the terminal, and the third message carries the related configuration information of the sensing reference signal, and the access network device sends a fourth message to the terminal, and the fourth message carries the encryption algorithm, where the third message and the fourth message may be any type of downlink AS message, such as any one of a Radio Resource Control (RRC) message, Downlink Control Information (DCI), etc.; and the third message and the fourth message occupy different time-domain ranges, the all possible cases of which will not be exhaustive here.

In some possible examples, the processing of the first device may also include: receiving a sensing service request from the sensing function entity, where the sensing service request may be used to trigger to perform a sensing service (or a sensing task). In addition, the trigger to perform the sensing service may also be initiated by the second device, and for example, the second device may send the sensing service request to the first device, to trigger to perform the sensing service.

The above-mentioned sensing service request may carry at least one of: a sensing service identity, a first device identity, etc.

After the first device receives the sensing service request, it may also send a sensing capability request to the second device, where the sensing capability request may carry the sensing service identity, and the first device identity, etc. Then, the subsequent processing such as the second device reporting the capability mentioned above is performed, which will not be repeated here.

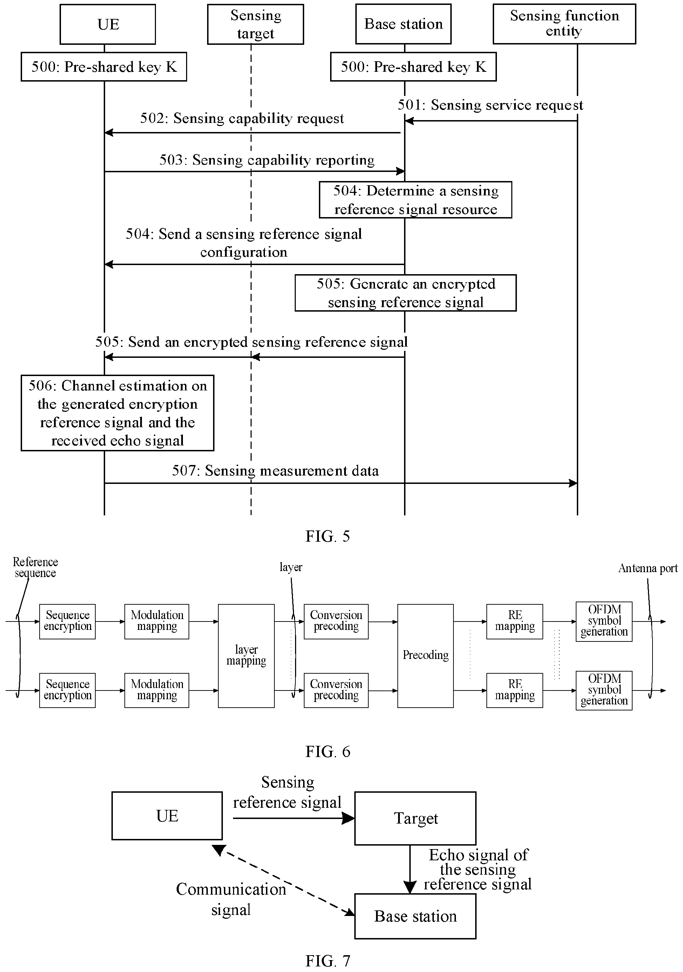

In conjunction with FIG. 4, a possible architecture of a communication method provided in the embodiments is illustrated, a downlink sensing scenario of an NR downlink is illustrated in FIG. 4, and in FIG. 4, the base station is the first device mentioned above, and the UE is the second device mentioned above, communication signals may be transmitted between the base station and the UE, and the base station sends a sensing reference signal, and the UE receives and measures an echo signal reflected through a sensing target. To ensure the security of the sensing signal, the sender base station encrypts the sensing reference signal sequence based on the shared key K to form an encrypted sensing reference signal, and the receiver UE first generates the same encrypted sensing reference signal based on the shared key K, and then performs channel estimation on the received echo signal to acquire sensing measurement data. Based on the scenario in FIG. 4, and in conjunction with FIG. 5, taking the above first device as the base station and the above second device as the UE as an example, an exemplary description of the above communication method is as follows.

Step 500: the base station and the UE share a key K; the key K may be a pilot key derived from a KgNB shared by the base station and the UE, or may be a physical layer key generated by the UE and the base station.

Step 501: the sensing function entity (such as any one of AF/SF/Sensing client/Client UE) sends a sensing service request (or which may be a sensing service request triggered by the sensing UE itself) to the base station.

Step 502: the base station sends a sensing capability request to the UE, where the request includes the sensing service identity, base station identity, etc.

Step 503: the UE reports the sensing capability to the base station, and the sensing capability of the UE includes at least one of: a supported sensing measurement result, such as measurement departure angle, angle of arrival, and delay; a support for calculating a sensing result, such as distance, speed, angle of the target; a processing capability of receiving a sensing signal, such as the maximum number of targets that can be sensed simultaneously, the maximum distance that can be sensed, etc.; an identification capability of a sensing target or a target type that can be sensed, such as the support to sense specific target types only; a supported sensing precision; and a UE wireless capability. The UE wireless capability includes at least one of: a bandwidth and a processing capability for supporting signal transmission and reception, etc.; and a supported beam scanning function, etc.

Step 504: the base station determines a sensing reference signal resource based on the sensing capability of the UE and sends a sensing reference signal configuration (i.e., the related configuration information of the sensing reference signal) to the UE via an RRC System Information message.

The reference signal configuration information includes but is not limited to: indication information of a time-domain resource, a frequency-domain resource and a spatial domain resource of the reference signal, an identity ID of the reference signal of the receiving (sending) terminal, an encryption algorithm for the reference signal sequence, a sending mode (periodic, semi-persistent, non-periodic) of the reference signal, etc. The sensing resource configuration between the UE and the base station may fully reuse the existing control plane protocol stack at the access stratum. The base station indicates the type of the reference signal received by the UE, and the reference signal may be a newly defined downlink sensing reference signal, a CSI-RS, sensing based on a downlink data channel, DL-PRS, DM-RS, etc. For example, for the DL-PRS processing, the configuration information may be used to notify the lower layer to start the DL-PRS measurement, and provide the lower layer with position information of the DL-PRS, such as a DL-PRS point and DL-PRS positioning occasion information.

Step 505: the base station generates an encrypted sensing reference signal and sends the encrypted sensing reference signal. Specifically: 1) the base station first generates a reference signal sequence through a pseudo-noise sequence generator; 2) then, encrypts the reference signal sequence based on the key K; 3) according to the NR physical layer protocol 38.211, the BS performs processes such as modulation, layer mapping, precoding, resource mapping, etc., on the above-mentioned encrypted reference sequence, to form the encrypted sensing reference signal x(t), and sends the encrypted sensing reference signal to the sensing target via the antenna.

For an exemplary description in conjunction with FIG. 6, the base station performs the above processing, which may specifically include: the base station first generates a reference signal sequence through a pseudo-noise sequence generator; then, encrypts the reference signal sequence based on the key K, to obtain a first reference signal sequence; for modulation mapping processing, in the modulation processing, modulates the first reference signal sequence to obtain a modulated signal; performs layer mapping on the modulated signal; performs conversion precoding on data obtained from the layer mapping, and performs precoding on data obtained from the conversion precoding (specifically, which may be multiplied by a precoding matrix), to complete the dimension conversion from layers to antenna ports; performs RE (Resource Element) mapping processing on data corresponding to each antenna port, to obtain I-path and Q-path modulated data in the time-domain resource and frequency-domain resource; passes the I-path and Q-path modulated data through an OFDM symbol generator, to output two-path OFDM signals, and then sends out the two-path OFDM signals through the antenna ports.

The modulation mode may be configured according to actual situations, for example, it may include QPSK (Quadrature Phase Shift Keying) modulation and other modes, and the processing of modulation is not limited or exhaustive in this embodiment.

Step 506: the UE receives the sensing echo signal y(t) reflected through the sensing target; the UE generates the same encryption reference signal x(t) as the BS side based on the key K and the reference signal configuration information delivered by high-layer RRC signaling; and the UE performs channel estimation based on the generated encryption reference signal and the received echo signal.

Step 507: the UE sends the acquired sensing measurement data to the sensing function entity.

In some possible implementations, the first device and the second device may be devices in a communication network (such as a mobile communication network or a cellular network). Specifically, the first device is a terminal and the second device is an access network device.

In this implementation, the sensing reference signal is an uplink sensing reference signal, where the uplink sensing reference signal is one of: a sounding reference signal (SRS), DMRS, an uplink data signal for sensing, and an uplink reference signal for sensing.

The uplink data signal for sensing may refer to a signal transmitted for sensing based on an uplink data channel or based on an uplink data channel for sensing, etc. The uplink data channel may be a PUSCH (physical uplink shared channel, Physical Uplink Shared Channel), etc., and is not exhaustive here.

The uplink reference signal for sensing may refer to an uplink reference signal dedicated to sensing, that is, an uplink reference signal dedicated to sensing that is not the same as the SRS.

The first reference signal sequence is obtained by encrypting the reference signal sequence based on the shared key. The shared key is a key shared by the first device and the second device, where the second device is a device that receives the echo signal of the sensing reference signal.

The reference signal sequence may be a noise sequence or a pseudo-noise (PN) sequence.

The pseudo-noise sequence may be generated by a pseudo-noise sequence generator. In an example, it is assumed that the uplink reference signal may be an SRS, the pseudo-noise sequence used to generate the SRS is represented as $c(i)$. The pseudo-noise sequence $c(i)$ may be generated based on an initial value $c_{init}$, and the initial value $c_{init}$ may be calculated in the following mode: $c_{init} = n_{ID}^{SRS}$, where $n_{ID}^{SRS}$ is an SRS sequence identity, configured by the high layer, and its value range may be 0 to 1023, and furthermore, the pseudo-noise sequence is generated based on the initial value, and its specific processing mode is the same as that of the above embodiments and will not be repeated.

It should be understood that the above only takes the SRS as an example to exemplarily illustrate a possible generation mode of the pseudo-noise sequence, and in the actual processing, other modes may also be used to generate the pseudo-noise sequence for generating other uplink sensing reference signals, this embodiment does not limit or exhaust all possible modes.

The encryption algorithm for encrypting the reference signal sequence may refer to a symmetric encryption algorithm and may include, for example, one of: AES (Advanced Encryption Standard), HASH Algorithm, SHA (Secure Hash Algorithm)-256, DES (Data Encryption Standard), 3DES (Triple Data Encryption Algorithm), etc.

Optionally, the first reference signal sequence is obtained by directly encrypting the reference signal sequence based on the shared key. The specific calculation mode of the first reference signal sequence is the same as that of the above embodiments and will not be repeated.

Optionally, the first reference signal sequence is obtained by encrypting the reference signal sequence based on a first key, where the first key is calculated based on the shared key. The specific calculation mode of the first reference signal sequence is the same as that of the above embodiments and will not be repeated.

Generating the sensing reference signal based on the first reference signal sequence may include: processing, by the first device, the first reference signal sequence, to obtain the sensing reference signal. Specifically, the first device processes the first reference signal sequence based on related configuration information of the sensing reference signal, to obtain the sensing reference signal.

The related configuration information of the sensing reference signal includes at least one of: a time-domain resource of the sensing reference signal, a frequency-domain resource of the sensing reference signal, a spatial domain resource of the sensing reference signal, and a sending mode of the sensing reference signal.

The time-domain resource of the sensing reference signal may be used to indicate a time-domain resource occupied by an uplink sensing reference signal.

The frequency-domain resource of the sensing reference signal may be used to indicate a frequency-domain resource occupied by an uplink sensing reference signal.

The spatial domain resource of the sensing reference signal may be used to indicate a spatial domain resource of an uplink sensing reference signal. The spatial domain resource may include at least one of a codeword, a layer, an antenna port, etc.

The sending mode of the sensing reference signal may include one of: the uplink sensing reference signal being periodically sent, the uplink sensing reference signal being semi-persistently sent, the uplink sensing reference signal being aperiodically sent, etc.

Optionally, the related configuration information of the sensing reference signal may also include at least one of: a repetition factor, a sending period, muting pattern-pat, etc. The description thereof is similar to that of the above examples, with the only difference being that this embodiment is for the uplink sensing reference signal, and thus will not be repeated.

Exemplarily, processing, by the first device, the first reference signal sequence based on the related configuration information of the sensing reference signal, to obtain the sensing reference signal, may refer to: performing, by the first device, at least one processing such as modulation, etc., on the first reference signal sequence, based on the related configuration information of the sensing reference signal, to obtain an uplink sensing reference signal. The detailed description of this example is also similar to that of the above embodiments, and the specific processing mode of the uplink sensing reference signal is also similar to the mode of generating related types of uplink signals in related art, and will not be repeated here.

The processing of the second device after receiving the echo signal of the sensing reference signal, may include: encrypting the reference signal sequence based on the shared key to obtain the second reference signal sequence; and generating an encryption reference signal based on the second reference signal sequence.

Since the second device and the first device need to use the same generating mode to generate the same reference signal sequence, the mode of generating the reference signal sequence by the second device will not be repeated here.

Optionally, the second reference signal sequence is obtained by directly encrypting the reference signal sequence based on the shared key. The specific calculation mode of the second reference signal sequence is the same as that of the above embodiments and will not be repeated.

Optionally, the second reference signal sequence is obtained by encrypting the reference signal sequence based on a second key, where the second key is calculated based on the shared key. The specific calculation mode of the second reference signal sequence is the same as that of the above embodiments and will not be repeated.

The above is only an exemplary illustration, and in the actual processing, this embodiment does not limit which mode the first device and the second device use to encrypt and calculate the reference signal sequence, as long as the first device and the second device use the same mode to encrypt and calculate the reference signal sequence, it falls within the protection scope of this embodiment.

Generating, by the second device, the encryption reference signal based on the second reference signal sequence, may include: performing, by the second device, at least one processing such as modulation, layer mapping, resource mapping, etc., on the second reference signal sequence, based on the related configuration information of the sensing reference signal, to obtain the encryption reference signal. The description of the specific processing mode by which the second device obtains the encryption reference signal, should be the same as that of the processing mode by which the first device obtains the sensing reference signal, and will not be repeated here. It should be noted that the encryption reference signal does not need to be sent, that is, the second device side may only need to just modulate and obtain an encryption reference signal to be sent.

The sensing measurement data on the second device side is obtained based on a channel estimation value, where the channel estimation value is calculated based on the encryption reference signal and the echo signal of the sensing reference signal. Obtaining the sensing measurement data in the second device, as well as the specific content that the sensing measurement data may include, are the same as those in the above embodiments and will not be repeated.

After the second device obtains the sensing measurement data, it may also include: sending, by the second device, the sensing measurement data to the sensing function entity.

In this implementation, the second device is an access network device, and the first device may be a terminal, and correspondingly, the access network device may send the sensing measurement data to the sensing function entity through any message, and the message or signaling it uses is not limited here; it should also be noted out that regarding a transmission protocol of the sensing measurement data, if the sensing measurement data includes original data (such as the aforementioned sensing original result with an extremely large data transmission volume) and/or intermediate measurements (such as the aforementioned sensing preliminary result and/or sensing intermediate result, and these two types of result have large data transmission volumes), it may be transmitted by the user plane; if the sensing measurement data includes the sensing result (such as the aforementioned sensing final result with a small data transmission volume), it may be transmitted by the control plane.

Before the first device sends the sensing reference signal and before the second device receives the echo signal of the sensing reference signal, the first device and the second device also need to determine or pre-configure the related configuration information.

In an embodiment, on the second device side, the encryption algorithm for encrypting the reference signal sequence is pre-determined. On the first device side, the encryption algorithm for encrypting the reference signal sequence may be pre-configured. Specifically, the encryption algorithm for encrypting the reference signal sequence on the first device side may be pre-configured by the second device to the first device.

The processing of the first device before pre-configuring the encryption algorithm also includes: reporting a capability of the first device to the second device, where the capability of the first device is used to determine at least one of: the related configuration information of the sensing reference signal, and the encryption algorithm. Before the second device determines the encryption algorithm, it may also include: receiving a capability of the first device, where the capability of the first device is used to determine at least one of: the related configuration information of the sensing reference signal, and the encryption algorithm.

The mode by which the second device determines the encryption algorithm may include that: the second device determines the encryption algorithm based on the capability of the first device; or, the second device determines the encryption algorithm based on a capability of the first device and the capability of the second device. The capability of the first device may include one or more optional encryption algorithms that the first device can support, and/or encryption algorithms that the first device can support as most, etc. The description of the capability of the first device is similar to that of the capability of the second device, and will not be repeated here. The mode by which the second device determines the encryption algorithm is not limited in this embodiment.

The processing of the second device may also include: sending an encryption algorithm for encrypting the reference signal sequence to the first device. Correspondingly, the processing of the first device may include: receiving the encryption algorithm for encrypting the reference signal sequence, configured by the second device.

In an embodiment, on the second device side, the related configuration information of the sensing reference signal is pre-determined. On the first device side, the related configuration information of the sensing reference signal is pre-configured; specifically, the related configuration information of the sensing reference signal on the first device side may be pre-configured by the second device to the first device.

The processing of the first device before pre-configuring the related configuration information of the sensing reference signal also includes: reporting a capability of the second device to the second device. Before the second device determines the related configuration information of the sensing reference signal, it may also include: receiving the capability of the first device.

The mode by which the second device determines the related configuration information of the sensing reference signal may include that: the second device determines the related configuration information of the sensing reference signal based on the capability of the first device; or, the second device determines the related configuration information of the sensing reference signal based on a capability of the first device and the capability of the second device.

The capability of the first device may also include a sensing capability of the first device.

The sensing capability of the first device includes at least one of: a supported sensing measurement result, a support for calculating a sensing result, a processing capability of receiving a sensing signal, an identification capability of a sensing target, a target type that can be sensed, a supported sensing precision, and a wireless capability. The detailed description of the above content is similar to that of the sensing capability of the second device mentioned above and will not be repeated.

The processing of the second device may also include: sensing the related configuration information of the sensing reference signal to the first device. Correspondingly, the processing of the first device may include: receiving the related configuration information of the sensing reference signal configured by the second device.

Taking the second device as the access network device and the first device as the terminal for explanations, the terminal reports the capability of the terminal to the access network device; correspondingly, the access network device may, in combination with the capability of the terminal, determine the related configuration information of the sensing reference signal and the encryption algorithm, and then send the related configuration information of the sensing reference signal and the encryption algorithm to the terminal, so that the terminal may determine the same related configuration information of the sensing reference signal and the same encryption algorithm as the access network device.

In the above scenario, the related configuration information of the sensing reference signal and the encryption algorithm may be carried in the same information or message. Alternatively, the related configuration information of the sensing reference signal and the encryption algorithm may be carried in different information or messages. All possible cases thereof are not exhaustive here.

In some possible examples, the processing of the second device may also include: receiving a sensing service request from the sensing function entity, where the sensing service request may be used to trigger to perform a sensing service (or a sensing task). In addition, the trigger to perform the sensing service may also be initiated by the first device, and for example, the first device may send the sensing service request to the second device, to trigger to perform the sensing service.

The above-mentioned sensing service request may carry at least one of: a sensing service identity, a second device identity, etc.

After the second device receives the sensing service request, it may also send a sensing capability request to the first device, where the sensing capability request may carry the sensing service identity, and the second device identity, etc. Then, the subsequent processing such as the first device reporting the capability mentioned above is performed, which will not be repeated here.

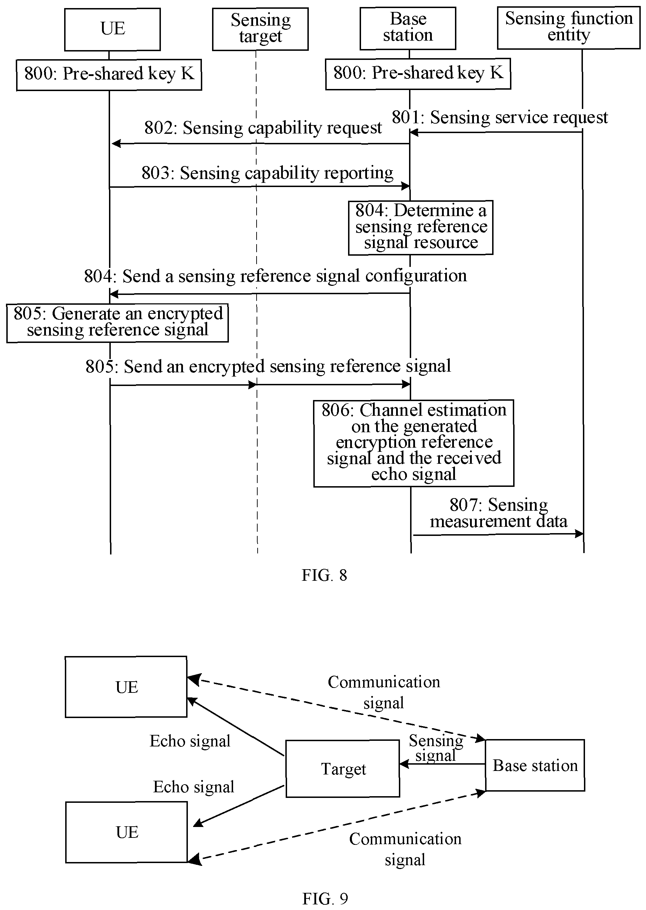

In conjunction with FIG. 7, another possible architecture of a communication method provided in the embodiments is illustrated, an uplink sensing scenario of an NR uplink (UE sending and the base station receiving, PUSCH channel) is illustrated in FIG. 7, and in FIG. 7, the base station is the second device mentioned above, and the UE is the first device mentioned above, communication signals may be transmitted between the base station and the UE, and the UE sends a sensing reference signal, and the base station receives and measures an echo signal reflected through a sensing target. To ensure the security of the sensing signal, the sender UE encrypts the sensing reference signal sequence based on the shared key K to form an encrypted sensing reference signal, and the receiver base station first generates the same encrypted sensing reference signal based on the shared key K, and then performs channel estimation on the received echo signal to acquire sensing measurement data. Based on the scenario in FIG. 7, and in conjunction with FIG. 8, taking the base station as the above second device and the UE as the above first device as an example, another exemplary description of the above communication method is as follows.

Step 801 to step 803 are the same as step 501 to step 503 in the above example of FIG. 5, and will not be repeated.

Step 804: the base station determines a sensing reference signal resource according to the sensing capability of the UE, and sends the reference signal configuration information to the UE through the RRC System Information message. Unlike the above embodiments, in this step, the base station indicates the UE to generate the sensing reference signal, and the sensing reference signal may be an SRS, a newly defined sensing reference signal, and sensing based on an uplink data channel, etc.

Step 805: the UE generates an encrypted sensing reference signal and sends the encrypted sensing reference signal. Specifically: 1) the UE first generates a reference signal sequence through a pseudo-noise sequence generator; 2) then, encrypts the reference signal sequence based on the key K; 3) according to the NR physical layer protocol 38.211, the UE performs processes such as modulation, layer mapping, precoding, resource mapping, etc., on the above-mentioned encrypted reference sequence, to form the encrypted sensing reference signal x(t), and send to the sensing target via the antenna.

Step 806: the base station receives the sensing echo signal y(t) reflected through the sensing target; the gNB generates the same encryption reference signal x(t) as the UE side based on the key K and the uplink reference signal configuration information that has been sent; and the gNB performs channel estimation based on the generated encryption reference signal and the received echo signal.

Step 807: the base station sends the acquired sensing measurement data to the sensing function entity.

In some possible implementations, the first device and the second device may be devices in a communication network (such as a mobile communication network or a cellular network), and the second device is a device in a sensing reception group. Specifically, the first device is an access network device, and the second device is a terminal, and multiple devices in the sensing reception group to which the second device belongs all receive the echo signal of the sensing reference signal.

In this implementation, the sensing reference signal is a downlink sensing reference signal, and the possible types of downlink sensing reference signal are the same as those in the above embodiments and will not be repeated.

The first reference signal sequence is obtained by encrypting a reference signal sequence based on a shared key. The shared key is a key shared by the first device and the second device, and specifically, the shared key is a group key shared by a sensing reception group to which the first device and the second device belong.

In this implementation, the sensing reception group to which the second device belongs may include multiple sensing reception devices for receiving the echo signal of the sensing reference signal, and the multiple sensing reception devices include the second device.

The first device and each sensing reception device in the sensing reception group may interact group information with each other in advance, and here, the interaction may be that the first device sends the group information to each sensing reception device. By interacting the group information, the first device and each sensing reception device may obtain the same group-related configuration.

Optionally, the group information may include a group key. Here, the group key may be a physical layer group key generated by multiple sensing reception devices and the first device, or may be a group key delivered by a new key management network element, this embodiment does not limit the mode for generating the group key.

Optionally, in addition to the group key, the group information may also include at least one of: sensing application identity (Sensing Application ID), a group identity (ID), a group member ID, etc., where the group member ID includes an ID of each sensing reception device.

The reference signal sequence may be a noise sequence or a pseudo-noise (PN) sequence. The description of the reference signal sequence is the same as the description of the reference signal sequence in the embodiments related to the downlink reference sensing signal mentioned above, and will not be repeated.

Regarding the specific generation mode of the first reference signal sequence and the specific processing mode by which the first device generates the downlink sensing reference signal, both are the same as those in the above embodiments, and the only difference lies in that the shared key in this embodiment is a group key, which thus will not be repeated.

The processing of the second device after receiving the echo signal of the sensing reference signal may include: encrypting the reference signal sequence based on the shared key to obtain the second reference signal sequence; and generating an encryption reference signal based on the second reference signal sequence. The specific processing of the second device is the same as that of the above embodiments, and the only difference lies in that the shared key in this embodiment is a group key, which thus will not be repeated.

The specific processing mode by which the second device obtains the sensing measurement data and the processing such as sending the sensing measurement data by the second device after obtaining the sensing measurement data, are the same as those in the above embodiments and will not be repeated.

The difference from the above embodiments lies in that in this embodiment, the second device is any sensing reception device in the sensing reception group, and each sensing reception device in the sensing reception group performs the same processing as the second device, and for brevity, this embodiment will not repeat one by one.

Before the first device sends the sensing reference signal and before the second device receives the echo signal of the sensing reference signal, the first device and the second device also need to determine or pre-configure the related configuration information.

In an embodiment, on the first device side, the encryption algorithm for encrypting the reference signal sequence is pre-determined. On the second device side, the encryption algorithm for encrypting the reference signal sequence may be pre-configured. Specifically, among multiple sensing reception devices, the encryption algorithm for encrypting the reference signal sequence by each sensing reception device may be pre-configured by the first device to each sensing reception device.

The processing of the second device before pre-configuring the encryption algorithm also includes: reporting a capability of the second device to the first device. Before the first device determines the encryption algorithm, it may also include: receiving the capability of the second device.

Specifically, each sensing reception device will perform the processing of reporting its own capability to the first device. Before the first device determines the encryption algorithm, it may also include: receiving the capability of each sensing reception device.

The mode by which the first device determines the encryption algorithm may include that: the first device determines the encryption algorithm based on the capability of each sensing reception device; or, the first device determines the encryption algorithm based on the capability of the first device and the capability of each sensing reception device. The capability of each sensing reception device may include one or more optional encryption algorithms that each sensing reception device can support, and/or encryption algorithms that each sensing reception device can support at most, etc. Regarding the mode by which the first device determines the encryption algorithm, it may be that the first device selects an encryption algorithm that can be supported by all sensing reception devices and itself, and there may be other modes by which the first device determines the encryption algorithm, which are not limited in this embodiment.

The processing of the first device may also include: sending an encryption algorithm for encrypting the reference signal sequence, to the second device. Correspondingly, the processing of the second device may include: receiving the encryption algorithm for encrypting the reference signal sequence, configured by the first device.

Specifically, the processing of the first device may also include: sending an encryption algorithm for encrypting the reference signal sequence to each sensing reception device. Correspondingly, the processing of each sensing reception device may include: the encryption algorithm for encrypting the reference signal sequence, configured by the first device.

In an embodiment, on the first device side, the related configuration information of the sensing reference signal is pre-determined. On the second device side, the related configuration information of the sensing reference signal is pre-configured. Specifically, among multiple sensing reception devices, the related configuration information of the sensing reference signal of each sensing reception device may be pre-configured by the first device to each sensing reception device.

The processing of the second device before pre-configuring the related configuration information of the sensing reference signal also includes: reporting a capability of the second device to the first device. Before the first device determines the related configuration information of the sensing reference signal, it may also include: receiving the capability of the second device. Specifically, each sensing reception device will perform the processing of reporting its own capability to the first device. Before the first device determines the encryption algorithm, it may also include: receiving the capability of each sensing reception device.

The mode by which the first device determines the related configuration information of the sensing reference signal may include that: the first device determines the related configuration information of the sensing reference signal based on the capability of each sensing reception device; or, the first device determines the related configuration information of the sensing reference signal based on the capability of the first device and the capability of each sensing reception device.

The capability of each sensing reception device may also include a sensing capability of each sensing reception device. The related description of the sensing capability of each sensing reception device is the same as that of the sensing capability of the first device or the sensing capability of the second device in the above embodiments, and will not be repeated.

The processing of the first device may also include: sending the related configuration information of the sensing reference signal to the second device. Correspondingly, the processing of the second device may include: receiving the related configuration information of the sensing reference signal, configured by the first device. Specifically, the processing of the first device may also include: sending the related configuration information of the sensing reference signal to each sensing reception device. Correspondingly, the processing of each sensing reception device may include: receiving the related configuration information of the sensing reference signal, configured by the first device.

Taking the first device as an access network device and multiple sensing reception devices as multiple terminals for explanations, the multiple terminals report capabilities of the terminals to the access network device; correspondingly, the access network device may, in conjunction with the capabilities of the multiple terminals, determines the related configuration information of the sensing reference signal and the encryption algorithm, and then sends the related configuration information of the sensing reference signal and the encryption algorithm to the multiple terminals, so that the multiple terminals determines the same related configuration information of the sensing reference signal and the same encryption algorithm as the access network device.

In the above scenario, the related configuration information of the sensing reference signal and the encryption algorithm may be carried in the same information or message. Alternatively, the related configuration information of the sensing reference signal and the encryption algorithm may be carried in different information or messages. All possible cases thereof are not exhaustive here.

In some possible examples, the processing of the first device may also include: receiving a sensing service request from the sensing function entity, where the sensing service request may be used to trigger to perform a sensing service (or a sensing task). The above-mentioned sensing service request may carry at least one of: a group sensing service identity, a first device identity, etc.

After the first device receives the sensing service request, it may also send a group sensing capability request to the multiple sensing reception devices, where the group sensing capability request may carry the group sensing service identity, the first device identity, etc. Then, the subsequent processing such as each sensing reception device reporting the capability mentioned above is performed, which will not be repeated here.

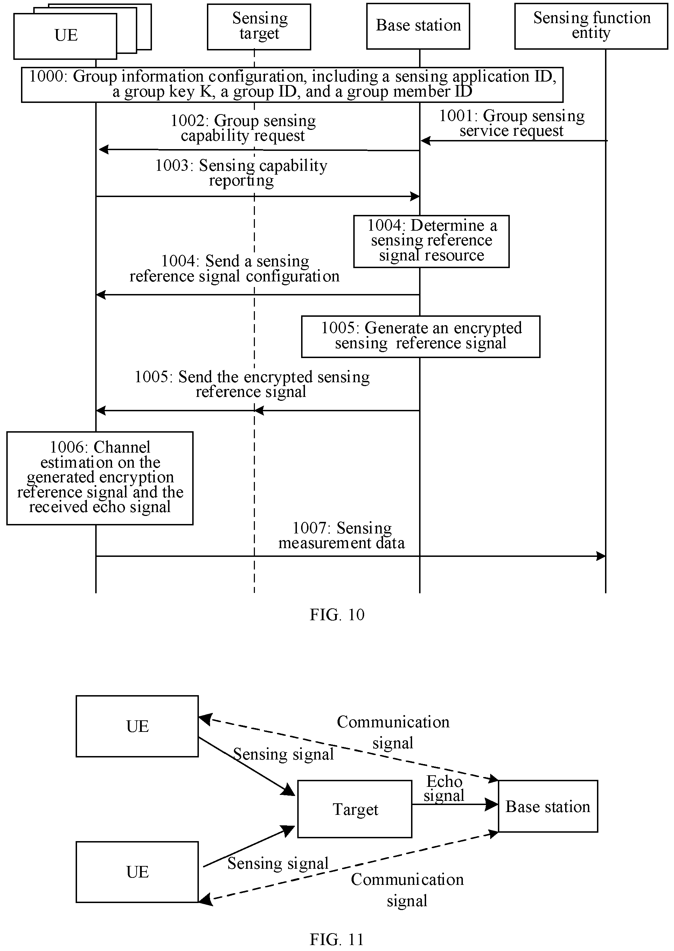

In conjunction with FIG. 9, another possible architecture of a communication method provided in the embodiments is illustrated. FIG. 9 illustrates a downlink group sensing scenario with the base station sending downlink, multiple UEs receiving echo signals, and the group key, and in FIG. 9, the base station is the above-mentioned first device, and any one of the multiple UEs is the above-mentioned second device. The base station may, according to a sensing measure requirement, simultaneously trigger a single UE or multiple UEs to perform downlink sensing measurement based on the downlink sensing signal. To ensure the security of the sensing signal, the sender base station encrypts a public sensing reference signal based on a shared group key K to form an encrypted sensing reference signal, and each UE generates the same encrypted sensing reference signal as the base station side based on the group key K, and then performs channel estimation on the received echo signal to acquire the sensing measurement result and send to the sensing function entity. Based on the scenario in FIG. 9, and in conjunction with FIG. 10, taking the aforementioned first device as the base station and the second device as any UE in the group (i.e., multiple UEs for receiving the echo signal of the sensing reference signal) as an example, an exemplary description of the above communication method is as follows.

Step 1000: the base station and the UEs configure group information through the 5GC, including sensing application ID, group key K, group ID, group member ID, etc.

Step 1001: the sensing function entity (such as any one of AF/SF/Sensing client/Client UE) triggers a group sensing service request to the base station.

Step 1002: the base station sends a group sensing capability request to the UEs, and the request includes a group sensing service identity, a base station identity, etc.

Step 1003 to step 1007 are the same as step 503 to step 507 shown in FIG. 5, except that the key is changed to a group key, and the sending mode of the base station for the downlink reference signal may be multicast sending.

It should be noted that in the process illustrated in FIG. 10, the main focus is on the interaction between the second device, i.e., any UE, and the base station, for explanations. In actual processing, each UE of the multiple UEs that receive the echo signal of the sensing reference signal performs the same processing as the second device (i.e., any of the above-mentioned UEs), but this will not be repeated one by one.

In some possible implementations, the first device and the second device may be devices in a communication network (such as a mobile communication network or a cellular network), and the first device is one device in a sensing sending group. Specifically, the first device is a terminal and the second device is an access network device, and multiple devices in the sensing sending group to which the first device belongs all send sensing reference signals.

In this implementation, the sensing reference signal is an uplink sensing reference signal, and the possible types of the uplink sensing reference signal are the same as those in the above embodiments and will not be repeated.

The first reference signal sequence is obtained by encrypting the reference signal sequence based on the shared key. The shared key is a key shared by the first device and the second device, and specifically, the shared key is a group key shared by the sensing sending group to which the first device belongs and the second device.

In this implementation, the sensing sending group to which the first device belongs may include multiple sensing sending devices for sending the sensing reference signal, and the multiple sensing sending devices include the first device.

The second device and each sensing sending device in the sensing sending group may interact group information with each other in advance, and here, the interaction may be that the second device sends the group information to each sensing sending device. By interacting the group information, the second device and each sensing sending device may obtain the same group-related configuration. The possible content contained in the group information is the same as that in the above embodiments and will not be repeated.

The reference signal sequence may be a noise sequence or a pseudo-noise (PN) sequence. The description of the reference signal sequence is the same as the description of the reference signal sequence in the embodiments related to the uplink reference sensing signal mentioned above, and will not be repeated.

Regarding the specific generation mode of the first reference signal sequence and the specific processing mode by which the first device generates the uplink sensing reference signal, both are the same as those in the above embodiments, and the only difference lies in that the shared key in this embodiment is a group key, which thus will not be repeated. The difference from the above embodiments lies in that in this embodiment, the first device is any sensing sending device in the sensing sending group, and each sensing sending device in the sensing sending group performs the same processing as the first device, and for brevity, this embodiment will not repeat one by one.

The processing of the second device after receiving the echo signal of the sensing reference signal may include: encrypting the reference signal sequence based on the shared key to obtain the second reference signal sequence; and generating an encryption reference signal based on the second reference signal sequence. The specific processing of the second device is the same as that of the above embodiments, and the only difference lies in that the shared key in this embodiment is a group key, which thus will not be repeated. The specific processing mode by which the second device obtains the sensing measurement data and the processing such as sending the sensing measurement data by the second device after obtaining the sensing measurement data, are the same as those in the above embodiments and will not be repeated.

The difference from the above embodiments lies in that in this embodiment, the first device is any sensing sending device in the sensing sending group, and each sensing sending device in the sensing sending group performs the same processing as the first device, and thus, the second device will receive the echo signal of the sensing reference signal of each sensing sending device among multiple sensing sending devices, and the second device may perform the same processing on the echo signal of the sensing reference signal of each sensing sending device, and finally, may obtain sensing measurement data corresponding to each sensing sending device, and for brevity, this embodiment will not repeat one by one.

It should be noted that since the second device will obtain the sensing measurement data corresponding to each sensing sending device, sending, by the second device, the sensing measurement data to the sensing function entity, may include at least one of that: the second device sends the sensing measurement data corresponding to each sensing sending device to the sensing function entity; the second device sends related information of the sensing measurement data to the sensing function entity, the related information of the sensing measurement data being obtained based on the sensing measurement data corresponding to each sensing sending device. The related information of the sensing measurement data may be obtained by processing based on the sensing measurement data corresponding to each sensing sending device, or may also be a set obtained by associating an identity of each sensing sending device and its corresponding sensing measurement data, etc., which is not limited or exhaustive here.

Before the first device (each sensing sending device) sends the sensing reference signal and before the second device receives the echo signal of the sensing reference signal, they also need to determine or pre-configure the related configuration information.

In an embodiment, on the second device side, the encryption algorithm for encrypting the reference signal sequence is pre-determined. On the first device side, the encryption algorithm for encrypting the reference signal sequence may be pre-configured. Specifically, the encryption algorithm for encrypting the reference signal sequence by each sensing sending device in multiple sensing sending devices may be pre-configured by the second device to each sensing sending device.

The processing of the first device before pre-configuring the encryption algorithm also includes: reporting a capability of the first device to the second device, where the capability of the first device is used to determine at least one of: the related configuration information of the sensing reference signal and the encryption algorithm. Before the second device determines the encryption algorithm, it may also include: receiving the capability of the first device, where the capability of the first device is used to determine at least one of: the related configuration information of the sensing reference signal and the encryption algorithm.

Specifically, each sensing sending device will perform the processing of reporting its own capability to the second device. Before the second device determines the encryption algorithm, it may also include: receiving a capability of each sensing sending device.

The mode by which the second device determines the encryption algorithm may include that: the second device determines the encryption algorithm based on the capability of each sensing sending device; or, the second device determines the encryption algorithm based on the capability of the second device and the capability of each sensing sending device. The capability of each sensing sending device may include one or more optional encryption algorithms that each sensing sending device can support, and/or encryption algorithms that each sensing sending device can support at most, etc. The mode by which the second device determines the encryption algorithm is similar to the mode by which the first device determines the encryption algorithm, which will not be limited.

The processing of the second device may also include: sending an encryption algorithm for encrypting the reference signal sequence to the first device. Correspondingly, the processing of the first device may include: receiving the encryption algorithm for encrypting the reference signal sequence, configured by the second device.

Specifically, the processing of the second device may also include: sending an encryption algorithm for encrypting the reference signal sequence, to each sensing sending device. Correspondingly, the processing of each sensing sending device may include: receiving the encryption algorithm for encrypting the reference signal sequence, configured by the second device.

In an embodiment, on the second device side, the related configuration information of the sensing reference signal is pre-determined. On the first device side, the related configuration information of the sensing reference signal is pre-configured. Specifically, the related configuration information of the sensing reference signal of each sensing sending device among multiple sensing sending devices may be pre-configured by the second device to each sensing reception device.

Each sensing sending device will perform the processing of reporting its own capability to the second device. Before the second device determines the encryption algorithm, it may also include: receiving a capability of each sensing sending device.

The mode by which the second device determines the related configuration information of the sensing reference signal may include that: the second device determines the related configuration information of the sensing reference signal based on the capability of each sensing sending device; or, the second device determines the related configuration information of the sensing reference signal based on the capability of the second device and the capability of each sensing sending device. The capability of each sensing sending device may also include a sensing capability of each sensing sending device. The related description of the sensing capability of each sensing sending device is the same as that of the sensing capability of the first device or the sensing capability of the second device in the above embodiments, and will not be repeated.

The processing of the second device may also include: sending the related configuration information of the sensing reference signal to the first device. Correspondingly, the processing of the first device may include: receiving the related configuration information of the sensing reference signal, configured by the second device. Specifically, the processing of the second device may also include: sending the related configuration information of the sensing reference signal to each sensing sending device. Correspondingly, the processing of each sensing sending device may include: receiving the related configuration information of the sensing reference signal, configured by the second device.

Taking the second device as an access network device and multiple sensing sending devices as multiple terminals for explanations, multiple terminals report capabilities of the terminals to the access network device; correspondingly, the access network device may, in conjunction with the capabilities of the multiple terminals, determine the related configuration information of the sensing reference signal and the encryption algorithm, and then send the related configuration information of the sensing reference signal and the encryption algorithm to the multiple terminals, so that the multiple terminals determine the same related configuration information of the sensing reference signal and the same encryption algorithm as the access network device.

In the above scenario, the related configuration information of the sensing reference signal and the encryption algorithm may be carried in the same information or message. Alternatively, the related configuration information of the sensing reference signal and the encryption algorithm may be carried in different information or messages. All possible cases thereof are not exhaustive here.

In some possible examples, the processing of the second device may also include: receiving a sensing service request from the sensing function entity, where the sensing service request may be used to trigger to perform a sensing service (or a sensing task). The above-mentioned sensing service request may carry at least one of: a group sensing service identity, a first device identity, etc.

After the second device receives the sensing service request, it may also send a group sensing capability request to multiple sensing sending devices, where the group sensing capability request may carry the group sensing service identity, the first device identity, etc. Then, the subsequent processing such as each sensing sending device reporting the capability mentioned above is performed, which will not be repeated here.

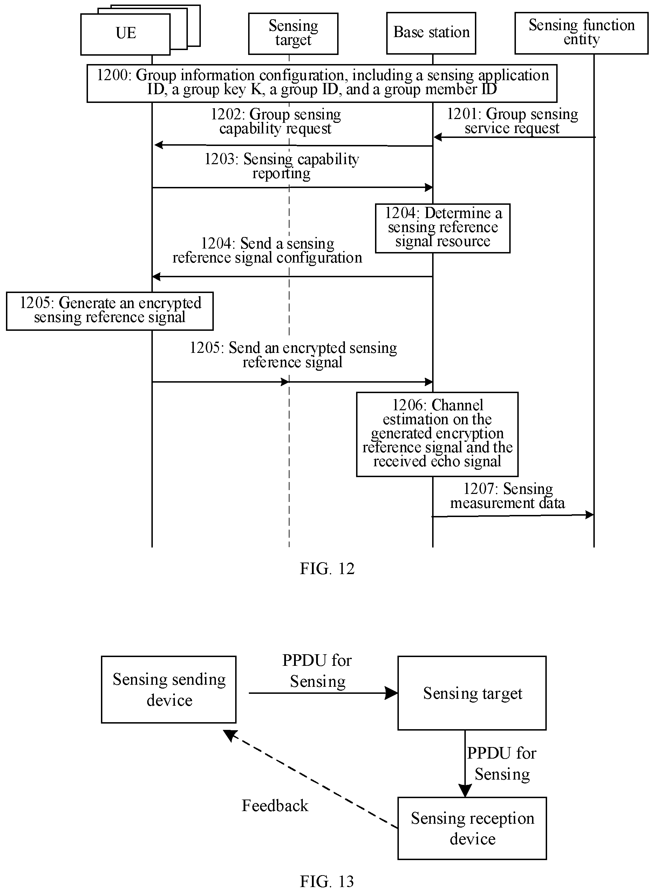

In conjunction with FIG. 11, another possible architecture of a communication method provided in the embodiments is illustrated. FIG. 11 illustrates an uplink group sensing scenario with multiple UEs sending sensing reference signals, the base station receiving echo signals in uplink, and using the group key, and in FIG. 11, any one of the multiple UEs is the above-mentioned first device, and the base station is the above-mentioned second device. The base station may, according to a sensing measure requirement, simultaneously trigger a single terminal or multiple terminals to send the uplink sensing signal for uplink sensing measurement. To ensure the security of the sensing signal, the group UE encrypts a public sensing reference signal based on a shared group key K to form an encrypted sensing reference signal, and the base station generates the same encrypted sensing reference signal as each UE side based on the group key K, and then performs channel estimation on the received each echo signal to acquire the sensing measurement result and send to the sensing function entity. Based on the scenario in FIG. 11, and in conjunction with FIG. 12, taking the aforementioned second device as the base station and the first device as any UE in the group (i.e., multiple UEs for sending the sensing reference signal) as an example, an exemplary description of the above communication method is as follows.

Step 1200: the base station and the UEs configure group information through the 5GC, including sensing application ID, group key K, group ID, group member ID, etc. The group key may be a physical layer group key generated by the UEs and the base station, or may be a group key delivered by a new key management network element.

Step 1201: the sensing function entity (such as any one of AF/SF/Sensing client/Client UE) triggers a group sensing service request to the base station.

Step 1202: the base station sends a group sensing capability request to the UEs, and the request includes a group sensing service identity, a base station identity, etc.

Step 1203 to step 1207 are the same as step 803 to step 807 shown in FIG. 8, except that the key (or the shared key) is changed to the group key and will not be repeated.

It should be noted that in the process illustrated in FIG. 12, the main focus is on the interaction between the first device, i.e., any UE, and the base station, for explanations. In actual processing, each UE of the multiple UEs that send the sensing reference signal performs the same processing as the first device (i.e., any of the above-mentioned UEs), but this will not be repeated one by one.

In some possible implementations, the first device and the second device may be devices in the WLAN. The first device is a wireless Access Point (AP) and the second device is a station (STA); or, the first device is an STA and the second device is an AP.

In this implementation, the sensing reference signal may be a physical layer protocol data unit (PPDU). The PPDU may specifically refer to a PPDU for sensing.

The first reference signal sequence is obtained by encrypting the reference signal sequence based on the shared key. The shared key is a key shared by the first device and the second device.

In this implementation, the reference signal sequence may be the entire content within all fields or the content of a specified field of the PPDU for sensing. The specified field may include at least one of: a field in which a preamble is located, a field in which a long training sequence is located, a field in which a short training sequence is located, a field in which a training sequence is located, etc., and for example, the reference signal sequence may be the training sequence (TRN) in the PPDU for sensing, for example, the reference signal sequence may be the long training sequence and/or the short training sequence in the PPDU for sensing, for example, the reference signal sequence may be the entire data content in the PPDU for sensing. Here, since the PPDU for sensing may vary in format depending on actual needs, this embodiment does not limit or exhaust the types or names of all possible fields and some specified fields that the PPDU may contain, as long as, in actual processing, some fields or all fields within a certain frame for sensing may be taken as the reference signal sequence, it falls within the protection scope of this embodiment.

In a preferred example, the first reference signal sequence is obtained by encrypting the reference signal sequence based on a first key, where the first key is calculated based on the shared key. The specific calculation mode of the first reference signal sequence is the same as that of the above embodiments and will not be repeated.

In an optional example, the first reference signal sequence is obtained by directly encrypting the reference signal sequence based on the shared key. The specific calculation mode of the first reference signal sequence is the same as that of the above embodiments and will not be repeated.

Generating the sensing reference signal based on the first reference signal sequence may include that: the first device processes the first reference signal sequence to obtain the sensing reference signal. Regarding the specific processing mode by which the first device processes the first reference signal sequence, it may include modulation, tuning, and other processing, which will not be exhaustive or limited here.

The processing of the second device after receiving the echo signal of the sensing reference signal may include: encrypting the reference signal sequence based on the shared key to obtain a second reference signal sequence; generating an encryption reference signal based on the second reference signal sequence. Since the second device and the first device need to use the same generation mode to generate the same reference signal sequence, the mode by which the second device generates the reference signal sequence will not be repeated here.

In a preferred example, the second reference signal sequence is obtained by encrypting the reference signal sequence based on a second key, where the second key is calculated based on the shared key. The specific calculation mode of the second reference signal sequence is the same as that of the above embodiments and will not be repeated.

In an optional example, the second reference signal sequence is obtained by directly encrypting the reference signal sequence based on the shared key. The specific calculation mode of the second reference signal sequence is the same as that of the above embodiments and will not be repeated.

Generating, by the second device, the encryption reference signal based on the second reference signal sequence, may include that: the second device processes the second reference signal sequence to obtain the encryption reference signal. The specific processing mode by which the second device obtains the encryption reference signal should be the same as the processing mode by which the first device obtains the sensing reference signal, and will not be exhaustive and limited here. It should be noted that the encryption reference signal does not need to be sent, that is, the second device side may only need to just modulate and obtain an encryption reference signal to be sent.

The sensing measurement data on the second device side is obtained based on a channel estimation value, where the channel estimation value is calculated based on the encryption reference signal and the echo signal of the sensing reference signal. Obtaining the sensing measurement data in the second device, and the specific contents that the sensing measurement data may include, are the same as those in the above embodiments and will not be repeated.

After the second device obtains the sensing measurement data, it may use the sensing measurement data locally. Alternatively, after the second device obtains the sensing measurement data, it may also include that: the second device sends the sensing measurement data to the first device. Alternatively, after the second device obtains the sensing measurement data, it may also include that: the second device sends the sensing measurement data to the sensing function entity.

In some possible examples, the processing of the first device may also include: sending a sensing service request to the second device. Correspondingly, the processing of the second device may also include: receiving the sensing service request from the first device. The sensing service request may be used to trigger to perform the sensing service (or sensing task). The above-mentioned sensing service request may carry at least one of: a sensing service identity, a first device identity, etc.

After receiving the sensing service request, the second device may also send a sensing service response to the first device. After the first device receives the sensing service response from the second device, it may perform the subsequent processing such as sending the sensing reference signal mentioned above, which will not be repeated here.

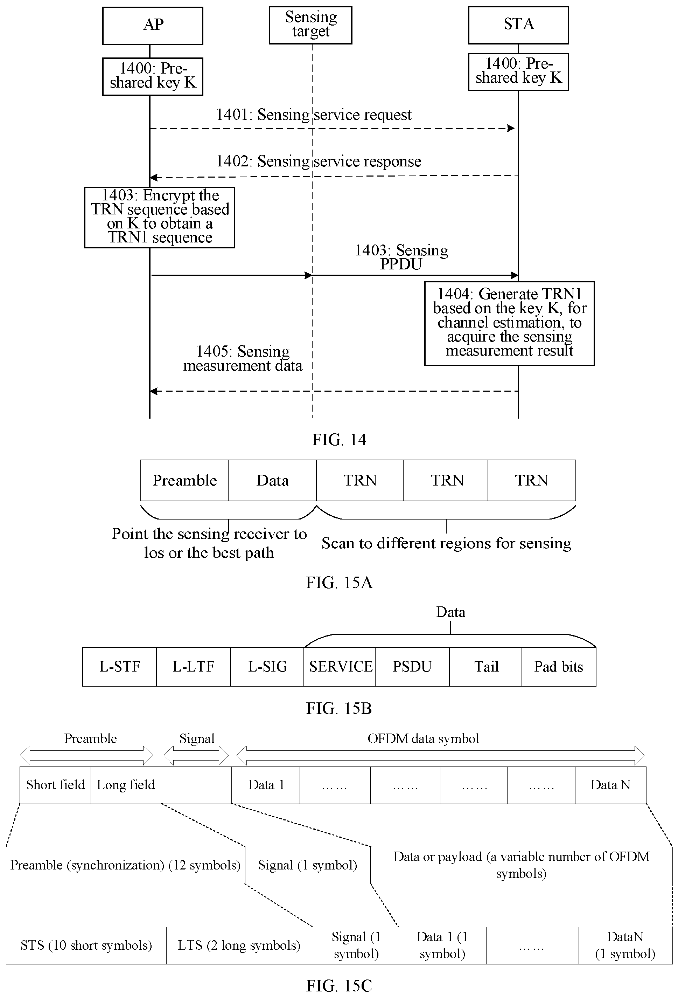

In conjunction with yet another possible architecture of the communication method provided in the embodiments in FIG. 13 for explanations, FIG. 13 illustrates a wifi sensing scenario, where the first device is the sensing sending device, such as a sensing initiator/transmitter, which may be an AP specifically, that is, the AP is used to send the sensing reference signal (in this example, which may be a PPDU for sensing illustrated in FIG. 13); and the second device is the sensing reception device, such as a sensing responder/receiver, which may be an STA specifically, that is, the STA is used to receive and perform sensing measurement. To ensure the security of the sensing signal, the sender AP encrypts a reference sequence TRN in the PPDU into a TRN1 based on the shared key K, and the receiver STA generates the same TRN1 based on the shared key K, and then performs channel estimation on the received sensing signal to acquire a sensing measurement result to send to the AP. Based on the scenario in FIG. 13, and in conjunction with FIG. 14, taking the AP as the above-mentioned first device and the STA as the above-mentioned second device as an example, yet another exemplary description of the above communication method is as follows.

Step 1400: the AP and the STA share a key K (the key may be a physical layer key generated by the AP and the STA, or an intermediate key derived from a root key shared by a local area network gateway and the AP).

Step 1401: the AP sends a sensing service request to the STA, which may be a SensingPolling Trigger (sensing trigger) frame.

Step 1402: the STA sends a sensing service response to the AP, which may be a clear to send (CTS)-to-self frame.

Step 1403: the AP encrypts a training sequence TRN in the sensing signal based on the key K, to obtain a TRN1 sequence; then, the AP sends a sensing PPDU.

Here, the sensing measurement of the sub-7 GHz band defined in IEEE 802.11bf is based on the existing beamforming detection sequence, and has some customized modifications to support the sensing use cases. Reusing of the sounding null data packet (NDP) may bring many benefits. First, most of the existing Wi-Fi devices have implemented the IEEE 802.11 beamforming protocol. Therefore, by reusing the similar sounding frame exchange, these devices will be relatively easy to upgrade to support the sensing capability. Second, the NDP for beamforming has all the training fields necessary for sensing, such as a short training field (STF) and a long training field (LTF), and at the same time, does not have any data payload that is not necessary for sensing. Therefore, using the NDP frame for sensing may minimize communication overhead.

Optionally, as shown in FIG. 15a, an NDP format includes: a preamble field, a data field, and multiple TRN (training sequence) fields; the preamble field and the data field are used to point the sensing receiver to los or the best path, and the TRN is used to scan to different regions for sensing. In this scenario, the mode by which the AP encrypts the TRN sequence is as follows: the AP performs a HASH operation on the shared key K to obtain a pilot key Kp (i.e., the first key), and encrypts the TRN reference sequence (i.e., the sensing reference sequence) based on the pilot key Kp to obtain the first reference signal sequence TRN1, by for example, the AES algorithm: $TRN1 = AES_{K_p}(TRN)$ ; in addition to the AES, it may also be a HASH algorithm, SHA-256, etc.

Optionally, as shown in FIG. 15b, a PPDU format includes: a Non-HT (Legacy) Short Training Field (L-STF, Non-HT (legacy) short training field (or short training field)), a Non-HT (Legacy) Long Training Field (non-HT (legacy) long training field (or long training field), L-LTF), Non-HT (Legacy) Signal Field (Non-HT (legacy) signal field, L-SIG), Data (i.e., non-HT Data Field, non-HT (legacy) data field); where the Data field includes: a Service field (service field), which may contain 16 zeros and is used to initialize the data scrambler; a PSDU, which may contain a PLCP service data unit (PSDU), and is a field with a variable length; a Tail (tail) field, which is a tail bit required to terminate the convolutional code, uses six zeros for a single code stream; Pad Bits(pad bits), which ensure that the non-HT data field contains a field with a variable length required for the integer number of symbols. Data is null when the PPDU is NDP. In this scenario, the above-mentioned TRN sequence may be replaced by at least some of the other fields in FIG. 15b, such as replaced by the above-mentioned data field, or replaced by all of the above-mentioned fields, or replaced by the above-mentioned long training field and/or short training field, etc., which will not be repeated here.

Optionally, as shown in FIG. 15c, yet another PPDU format includes: a Preamble field, where the preamble field includes a long field (Long) and a short field (Short), and specifically, the preamble field (used for synchronizing a total of 12 symbols) includes an STS (Short Training Sequence) field, the short training sequence may include 10 short symbols; and the preamble field includes an LTS (long training sequence) field, and the long training sequence may include 2 long symbols. It may also include: a signal field, which includes 1 symbol; and data or payload which includes: Data1 (data 1) field to DataN (data N) field, where this part may include a variable number of OFDM symbols, where each Data field includes 1 OFDM symbol. Data is null when the PPDU is NDP. In this scenario, the above-mentioned TRN sequence may be replaced by at least some of the other fields in FIG. 15c, such as replaced by the above-mentioned Data field, or replaced by all of the above-mentioned fields, or replaced by the above-mentioned long training field and/or short training field, etc., which will not be repeated here.

The processing of the AP sending the sensing PPDU, may include: the AP may be based on the 802.11bf protocol, the AP may perform modulation, layer mapping, precoding, resource mapping and other processes on the sensing PPDU to form the sensing reference signal (sensing PPDU), to send out through the antenna.

Here, IEEE 802.11bf reuses the existing Wi-Fi waveforms and the channels defined by the earlier IEEE 802.11 standard, to support Wi-Fi sensing in the sub-7 GHz band (i.e., the 2.4 GHz, 5 GHz and 6 GHz bands) and the 60 GHz millimeter-wave band. In the sub-7 GHZ band, waveform modulation is based on OFDM. A channel is generally 20Mhz wide and may have a channel bandwidth up to 320Mhz. In the 60GHz band, waveform modulation is a single carrier. Each channel has a width of 2.16 GHz and may have a bonded channel up to 8.64 GHz.

Step 1404: the STA receives the sensing echo signal reflected by the sensing target; based on the key K, the STA generates the same TRN1 sequence as the AP side; the STA performs channel estimation based on the TRN1 and the received echo signal to acquire the sensing measurement data. The reference training sequence TRN1 on the STA side is the same as the reference training sequence transmitted from the AP, so the correct estimation may be performed by a typical channel estimation method.

Step 1405 (optional): the STA sends the acquired sensing measurement data to the AP.

By using the above-mentioned solution, the sensing reference sequence may be encrypted on the first device side, thereby generating and sending the encrypted sensing reference signal, so that it may be ensured that the second device generates the encryption sensing reference signal in the same mode, thereby enabling correct channel estimation and obtaining the sensing measurement data, and in this way, the second device may complete the sensing measurement while resisting eavesdropping attacks and improving the security of the sensing reference signal.

In conjunction with related technologies, the beneficial effects of the communication method provided in the embodiments of the present application are further analyzed and described.

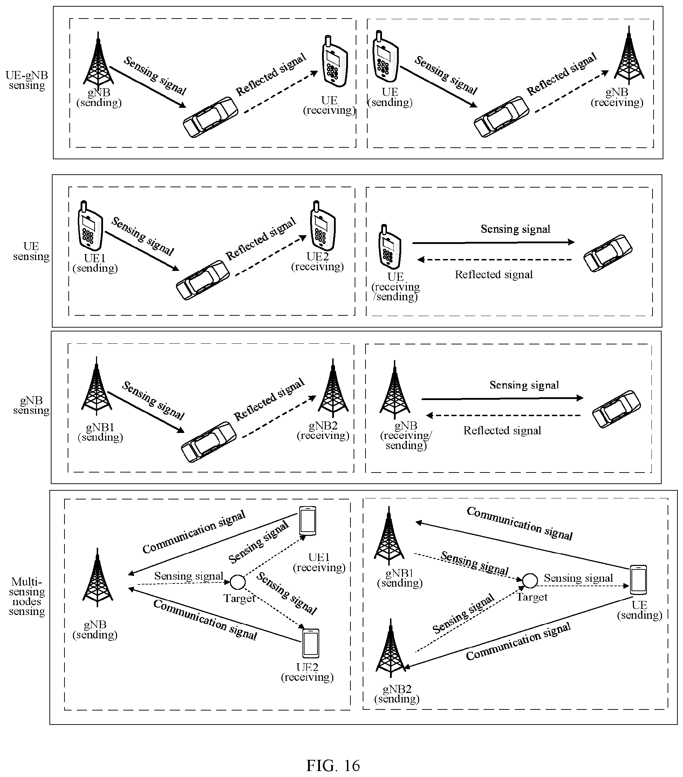

In conjunction with FIG. 16 for explanations, sensing scenarios may be divided into the following four types: a first type of UE-gNB sensing may be used in most sensing scenarios, including scenarios where the gNB sends a sensing signal and the UE receives a reflected signal of the sensing signal (the reflected signal may be referred to as an echo signal in some possible examples), as well as where the UE sends a sensing signal and the gNB receives a reflected signal of the sensing signal; a second type of UE sensing is applicable to the to C mode sensing and may be used in indoor scenarios with a limited sensing range, including that a UE1 sends a sensing signal and a UE2 receives a reflected signal of the sensing signal, as well as that a UE sends a sensing signal and receives a reflected signal of the sensing signal; a third type of gNB sensing is applicable for the to B mode sensing and may be used in outdoor scenarios with a larger sensing range, including that a gNB1 sends a sensing signal and a gNB2 receives a reflected signal of the sensing signal, as well as that a gNB sends a sensing signal and receives a reflected signal of the sensing signal. In a fourth type of multi-station sensing, there exists collaborative sensing by multiple sensing nodes, and these sensing nodes may be UEs or base stations, for example, a gNB sends a sensing signal, and a UE1 and a UE2 receive the sensing signal (specifically, a reflected signal of the sensing signal), and for another example, a gNB1 and a gNB2 send sensing signals, and a UE receives the sensing signals (specifically, reflected signals of the sensing signals).

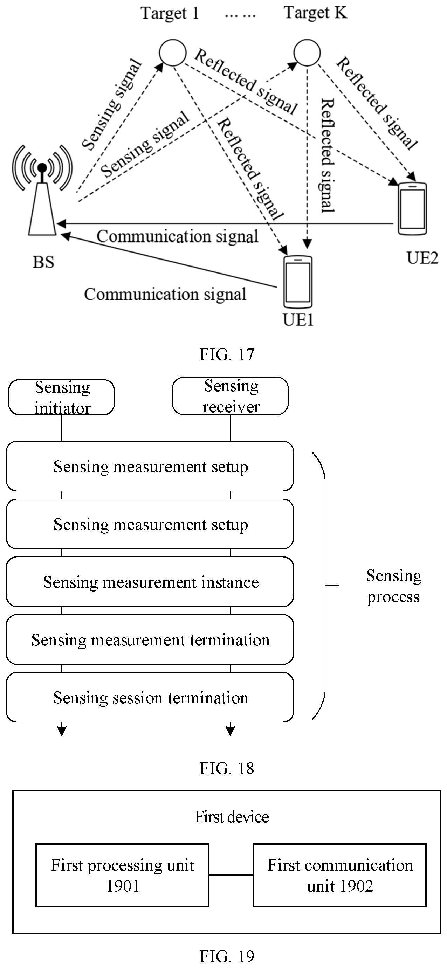

The UE senses by using one or more sensors among the non-3GPP sensors (such as cameras, lidar, and 3GPP-based sensing). In 3GPP (3rd Generation Partnership Project) 5G wireless sensing, a sensing transmitter and a sensing receiver sense the surrounding stationary and moving objects through measurement of time difference of arrival (TDoA), angle of arrival (AoA), angle of departure (AoD), RSSI (Received Signal Strength Indicator), etc. Taking sensing of the UE and base station BS as an example, as shown in FIG. 17, a BS sends sensing signals to multiple sensing targets (target 1 to target K in FIG. 17, where K is an integer greater than or equal to 2), and a UE1 and a UE2 may receive a reflected signal of each sensing signal, respectively. Transparent sensing is a use case where 3GPP sensing data is captured and communicated by the sensing transmitter and/or sensing receiver so that the 5GS (5th generation system) knows the 3GPP sensing data, while the non-3GPP sensing data is the result of the non-3GPP sensor and is transparent to the 5GS. According to the information, a service enablement program may be defined.

In R19, 3GPP has initiated research on communication services that merge sensing, where TR 22.837 researches sensing use cases and related requirements. From the perspective of services, sensing is an extension of positioning, and sensing services have the following characteristics that: there is a large volume of sensing data; the sensing result contains a variety of information, such as respiratory rate, heart rate and posture in human monitor; environmental features included in environmental monitor, etc.; the sensing object may be an active device (for example, UE), or a passive object (for example, sensing of the environment, sensing of the human body); the sensing result may contain multiple service requirement results, for example, the sensing result generated by the same sensing signaling includes respiratory rate, heart rate, and target position; there is a scenario in sensing where multiple sensing nodes collaborate in sensing, for example where multiple UEs receive the sensing signal. The current 3GPP security mainly lies in encryption and integrity protection on data at the PDCP layer, and this method cannot protect the low-layer channel state information. Furthermore, even if reference signal configuration parameters (such as time) are encrypted at a high layer, the level of anti-detection of the reference signal configuration parameters is generally lower than that of a 128-bit key, so that attackers can easily analyze and obtain the related configuration of the reference signal.

To meet the growing requirements of wireless sensing, the 802.11 working group has launched a project called 802.11bf (Wi-Fi sensing), intended to support passive device target sensing for many use cases. The 802.11bf refers to obtaining measurements that may be useful for determining features (for example, distance, speed, angle, detection, imaging) of expected targets (for example, object, person, animal, environment) in the interested region (for example, room, house, vehicle, enterprise). As stated in the Project Authorization Request (PAR) and Criteria for Standards Development (CSD) documents, the 802.11bf is intended to develop an amendment that defines modifications to 802.11 medium access control (MAC), Directional Multi-Gigabit (DMG), and Enhanced Directional Multi-Gigabit (EDMG) physical layer (PHY), to enhance sensing operations in the unlicensed frequency band from 1 GHz to 7.125 GHz and beyond 45 GHz. The modifications is expected to support different sensing applications in daily life, and ensure backward compatibility and coexistence with existing or traditional 802.11 devices operating in the same frequency band. The sensing of Sub-7 GHz has been implemented based on the modifications of the 802.11ax and 802.11be standards. It may implement sensing measurement with a bandwidth of up to 320 MHz and with up to 8 bands of 2.4 GHz, 5 GHz and 6 GHz, and may support sensing applications that need high resolution and good coverage.

According to the definition, the sensing initiator is a station (AP station or non-AP station) that initiates a sensing process by sending a sensing measurement setup request frame. The sensing responder is a station that participates in the sensing process initiated by the sensing initiator, and sends a sensing measurement setup response frame. The sensing transmitter is a station that transmits a PPDU for sensing in the sensing process. The sensing receiver is a station that obtains the sensing measurement by receiving the PPDU transmitted from the sensing transmitter. IEEE 802.11bf defines two variants of sensing measurement with sub-7 GHz. TB (Trigger-based) sensing measurement is applicable to a scenario where the AP is the sensing initiator, while non-TB (non-trigger-based) sensing measurement is applicable to a scenario where the STA (non-AP) is the sensing initiator.

According to whether the sensing initiator is also a sensing transmitter or a sensing receiver, a sensing measurement report may or may not be needed in the WLAN sensing process. Specifically, if the sensing initiator is also the sensing receiver, the initiator performs the measurement by itself and obtains the result through the measurement, without the need to write a sensing measurement report additionally. On the contrary, if the sensing initiator is the sensing transmitter, it relies on the sensing receiver for measurement. Therefore, unless otherwise specified, since the sensing initiator is to obtain the sensing measurement result, the sensing receiver is obligated to feed back the report to the initiator. In the WLAN scenario, there may also be multiple scenarios; in a scenario, the STA may send a sensing signal and receive a reflected signal (or referred to as an echo signal); in another scenario, the STA may initiate a sensing signal, and the AP receives the sensing signal and sends an echo signal or a reflected signal to the STA, or the AP sends the sensing signal to the STA; in yet another scenario, it may be a sensing scenario with multiple sensing nodes, for example, multiple STAs may initiate sensing signals, and the AP receives the sensing signals (or echo or reflected signals of the sensing signals), and for another example, AP may initiate a sensing signal, and multiple STAs receive the sensing signal (or a reflected signal or an echo signal of the sensing signal), and so on.

The sensing process of the sensing initiator (SensingInitiator) and the sensing receiver (SensingResponder) of the Sub-7 GHz is shown in FIG. 18, which includes the following steps in sequence: Sensing Session Setup, which is a process in which devices with the sensing capability discover each other, establish a safe environment and exchange basic sensing capabilities, and which establishes a necessary initial step for initiating subsequent sensing measurement; Sensing Measurement Setup, which is a process in which the sensing initiator and the sensing responder negotiate and reach an agreement on operational parameters related to a specific sensing application, including role assignment (transmitter or receiver), PHY parameters (bandwidth, the number of space stream, etc.), a sensing measure report type and preferred scheduling information (a sensing period, duration, etc.); Sensing Measurement Instance, which is a process in which the actual sensing measurement occurs; Sensing Measurement Termination, which terminates the established sensing measure setup; and Sensing Session Termination, which terminates the established sensing session. The unipolar sensing of self-sending and self-receiving does not consider or not perform the Sensing Session Setup and the Sensing Measurement Setup.

With the development of wifi sensing technologies, security and privacy issues have also attracted people's attention. At present, there are two types of security and privacy issues in wifi sensing: 1) confidentiality and integrity protection of the sensing report. Potential solutions to eavesdropping on the sensing report include secure communication that encrypts sensing measurement during feedback. 2) eavesdropping on sensing packets/signals. Potential solutions for eavesdropping on sensing packets/signals include a physical layer security method for encrypting data packets/signals used to acquire sensing measurement.

From the above analysis, it can be seen that the research on Sensing is in its infancy in 3GPP, and the safety standard for Sensing has not yet been determined. Compared with positioning technologies, the target information of sensing is related to private data, such as the related data of the human body in the smart home scenario or the smart health/medical scenario. However, the leakage of CSI of the sensing signal may lead to the leakage of the sensitive data, resulting in security and privacy issues. Even if the existing 3GPP security technology is used to encrypt the transmission of the configuration parameters of the sensing reference signal (RRC encryption transmission), attackers may still use blind detection, parameter estimation and other technologies to acquire the configuration parameters of the sensing signal, and then perform channel estimation on the sensing signal to steal the sensing data. Sensing has become a key technology in 6G. However, since the sensing signal (such as SRS, PRS, DL-PRS) and the sensing data for measurement generally come from the lower layer (i.e., PHY or MAC), eavesdroppers may easily acquire the sensing channel state information and then infer the private information of the target, such as the heart rate and action of the human body, etc., and the existing 3GPP security mechanism is difficult to protect the lower layer CSI. For the CSI security issue of the sensing signal, the present disclosure proposes a physical layer security protection method, where the sender encrypts the sensing reference signal sequence at the physical layer by using a shared key, and the receiver generates an encryption sensing reference signal by using the same key and performs channel estimation on the received echo signal, to acquire the sensing measurement data. The present disclosure can resist CSI eavesdropping attacks and is compatible with the process of the existing NR reference signal generation standard.

FIG. 19 is a schematic diagram of a composition structure of a first device according to an embodiment of the present disclosure, including:

a first processing unit 1901, configured to generate a sensing reference signal based on a first reference signal sequence, where the first reference signal sequence is obtained by encrypting a reference signal sequence based on a shared key; and

a first communication unit 1902, configured to send the sensing reference signal, where the sensing reference signal is used to obtain sensing measurement data.

The first reference signal sequence is obtained by encrypting the reference signal sequence based on a first key, where the first key is calculated based on the shared key.

The shared key is a key shared by the first device and a second device, and the second device is a device that receives an echo signal of the sensing reference signal.

The shared key is a group key shared by a sensing reception group to which the first device and the second device belong.

The shared key is a group key shared by a sensing sending group to which the first device belongs, and the second device.

Related configuration information of the sensing reference signal includes at least one of: a time-domain resource of the sensing reference signal, a frequency-domain resource of the sensing reference signal, a spatial domain resource of the sensing reference signal, and a sending mode of the sensing reference signal.

The related configuration information of the sensing reference signal is pre-configured.

The first communication unit is configured to send the related configuration information of the sensing reference signal to a second device.

An encryption algorithm for encrypting the reference signal sequence is pre-configured.

The first communication unit is configured to send an encryption algorithm for encrypting the reference signal sequence, to a second device.

The first communication unit is configured to report a capability of the first device to the second device, where the capability of the first device is used to determine at least one of: the related configuration information of the sensing reference signal, and the encryption algorithm.

The first communication unit is configured to receive a capability of the second device.

The first device is a terminal, and the second device is an access network device.

**EP 4 780 034 A1**

The sensing reference signal is an uplink sensing reference signal, where the uplink sensing reference signal is one of: a sounding reference signal (SRS), a demodulation reference signal (DMRS), an uplink data signal for sensing, and an uplink reference signal for sensing.

The first device is an access network device, and the second device is a terminal.

The sensing reference signal is a downlink sensing reference signal, where the downlink sensing reference signal is one of: a channel state reference signal (CSI-RS), a positioning reference signal (PRS), a demodulation reference signal (DMRS), a downlink data signal for sensing, and a downlink reference signal for sensing.

The first device is a radio access point (AP) and the second device is a station (STA); or, the first device is an STA and the second device is an AP.

The sensing reference signal is a physical layer protocol data unit (PPDU).

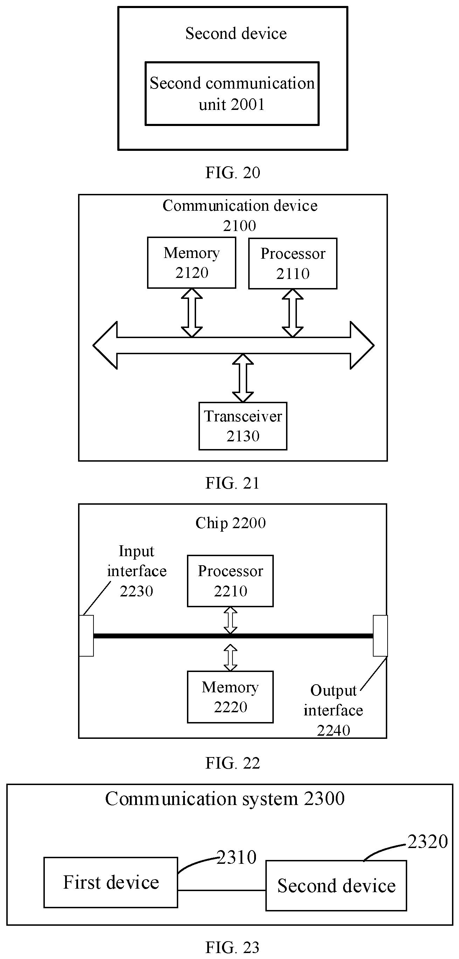

FIG. 20 is a schematic diagram of a composition structure of a second device according to an embodiment of the present disclosure including:

a second communication unit 2001, configured to receive an echo signal of a sensing reference signal; send sensing measurement data, where the sensing measurement data is obtained based on an encryption reference signal and the echo signal of the sensing reference signal, the encryption reference signal is generated based on a second reference signal sequence, and the second reference signal sequence is obtained by encrypting a reference signal sequence based on a shared key.

The second reference signal sequence is obtained by encrypting the reference signal sequence based on a second key, where the second key is calculated based on the shared key.

The sensing measurement data is obtained based on a channel estimation value, where the channel estimation value is calculated based on the encryption reference signal, and the echo signal of the sensing reference signal.

The shared key is a key shared by a first device and the second device, and the first device is a device that sends the sensing reference signal.

The shared key is a group key shared by a sensing reception group to which the first device and the second device belong.

The shared key is a group key shared by a sensing sending group to which the first device belongs, and the second device.

Related configuration information of the sensing reference signal includes at least one of: A time-domain resource of the sensing reference signal, a frequency-domain resource of the sensing reference signal, a spatial domain resource of the sensing reference signal, and a sending mode of the sensing reference signal.

The second communication unit is configured to send the related configuration information of the sensing reference signal to a first device.

The related configuration information of the sensing reference signal is pre-configured.

The second communication unit is configured to send an encryption algorithm for encrypting the reference signal sequence, to a first device.

The encryption algorithm for encrypting the reference signal sequence is pre-configured.

The second communication unit is configured to receive a capability of the first device, where the capability of the first device is used to determine at least one of: the related configuration information of the sensing reference signal, and the encryption algorithm.

The second communication unit is configured to report a capability of the second device to the first device.

The first device is a terminal, and the second device is an access network device.

The sensing reference signal is an uplink sensing reference signal, where the uplink sensing reference signal is one of: a channel sounding reference signal (SRS), a demodulation reference signal (DMRS), an uplink data signal for sensing, and an uplink reference signal for sensing.

The first device is an access network device, and the second device is a terminal.

The sensing reference signal is a downlink sensing reference signal, where the downlink sensing reference signal is one of: a channel state reference signal (CSI-RS), a positioning reference signal (PRS), a demodulation reference signal (DMRS), a downlink data signal for sensing, and a downlink reference signal for sensing.

The first device is a radio access point (AP) and the second device is a station (STA); or, the first device is an STA and the second device is an AP.

The sensing reference signal is a physical layer protocol data unit (PPDU).

It should be noted that although the above FIG. 20 only illustrates that the second device includes the second communication unit, the second device may also include the second processing unit, in actual processing, and the second processing unit may be configured to perform the encryption calculation, generate the second reference signal sequence, generate the encryption reference signals, calculate the channel estimation value, and obtain the sensing measurement data and other related processing, the specific processing that the second processing unit may perform is the same as the description for the related processing performed by the second device in the above embodiments of the communication method, and thus will not be repeated here.

The devices in the embodiments of the present disclosure can implement the corresponding functions of the devices in the above embodiments of the communication method. The procedure, function, implementation and beneficial effects corresponding to each module (e.g., sub-module, unit or component, etc.) in each device may refer to the corresponding description in the above method embodiments and will not be repeated here. It should be noted that the functions described with respect to the various modules (e.g., sub-modules, units or components, etc.) in each device in the embodiments of the present disclosure may be implemented by different modules (e.g., sub-modules, units or components, etc.) or implemented by a same module (e.g., sub-module, unit or component, etc.).

FIG. 21 is a schematic structural diagram of a communication device 2100 according to the embodiments of the present disclosure. The communication device 2100 includes a processor 2110, and the processor 2110 invokes a computer program from a memory and runs the computer program, to enable the communication device 2100 to implement the method in the embodiments of the present disclosure.

In a possible implementation, the communication device 2100 may further include a memory 2120. The processor 2110 may invoke a computer program from the memory 2120 and run the computer program, to enable the communication device 2100 to implement the method in the embodiments of the present disclosure. The memory 2120 may be a separate device independent of the processor 2110, or may be integrated into the processor 2110.

In a possible implementation, the communication device 2100 may further include a transceiver 2130, and the processor 2110 may control the transceiver 2130 to communicate with other devices, and specifically, to be capable of transmitting information or data to other devices, or receiving information or data transmitted from other devices. The transceiver 2130 may include a transmitter and a receiver. The transceiver 2130 may further include an antenna, and the number of antennas may be one or more.

The embodiments of the present disclosure provides a first device, including: a processor, and a memory communicating with the processor, where the memory is configured to store instructions, and when the instructions are executed by the processor, the instructions enable the first device to: generate a sensing reference signal based on a first reference signal sequence, where the first reference signal sequence is obtained by encrypting a reference signal sequence based on a shared key; and send the sensing reference signal, where the sensing reference signal is used to obtain sensing measurement data.

The first reference signal sequence is obtained by encrypting the reference signal sequence based on a first key, where the first key is calculated based on the shared key.

The shared key is a key shared by the first device and a second device, and the second device is a device that receives an echo signal of the sensing reference signal.

The shared key is a group key shared by a sensing reception group to which the first device and the second device belong.

The shared key is a group key shared by a sensing sending group to which the first device belongs, and the second device.

Related configuration information of the sensing reference signal includes at least one of: a time-domain resource of the sensing reference signal, a frequency-domain resource of the sensing reference signal, a spatial domain resource of the sensing reference signal, and a sending mode of the sensing reference signal.

The related configuration information of the sensing reference signal is pre-configured.

The instructions further enable the first device to: send the related configuration information of the sensing reference signal to a second device.

An encryption algorithm for encrypting the reference signal sequence is pre-configured.

The instructions further enable the first device to: send an encryption algorithm for encrypting the reference signal sequence, to a second device.

The instructions further enable the first device to: report a capability of the first device to the second device, where the capability of the first device is used to determine at least one of: the related configuration information of the sensing reference signal, and the encryption algorithm.

The instructions further enable the first device to: receive a capability of the second device.

The first device is a terminal, and the second device is an access network device.

The sensing reference signal is an uplink sensing reference signal, where the uplink sensing reference signal is one of: a sounding reference signal (SRS), a demodulation reference signal (DMRS), an uplink data signal for sensing, and an uplink reference signal for sensing.

The first device is an access network device, and the second device is a terminal.

The sensing reference signal is a downlink sensing reference signal, where the downlink sensing reference signal is one of: a channel state reference signal (CSI-RS), a positioning reference signal (PRS), a demodulation reference signal (DMRS), a downlink data signal for sensing, and a downlink reference signal for sensing.

The first device is a radio access point (AP) and the second device is a station (STA); or, the first device is an STA and the second device is an AP.

The sensing reference signal is a physical layer protocol data unit (PPDU).

The embodiments of the present disclosure provides a second device, including: a processor, and a memory communicating with the processor, where the memory is configured to store instructions, and when the instructions are executed by the processor, the instructions enable the first device to: receive an echo signal of a sensing reference signal; send sensing measurement data, where the sensing measurement data is obtained based on an encryption reference signal and the echo signal of the sensing reference signal, the encryption reference signal is generated based on a second reference signal sequence, and the second reference signal sequence is obtained by encrypting a reference signal sequence based on a shared key.

The second reference signal sequence is obtained by encrypting the reference signal sequence based on a second key, where the second key is calculated based on the shared key.

The sensing measurement data is obtained based on a channel estimation value, where the channel estimation value is calculated based on the encryption reference signal, and the echo signal of the sensing reference signal.

The shared key is a key shared by a first device and the second device, and the first device is a device that sends the sensing reference signal.

The shared key is a group key shared by a sensing reception group to which the first device and the second device belong.

The shared key is a group key shared by a sensing sending group to which the first device belongs, and the second device.

Related configuration information of the sensing reference signal includes at least one of: A time-domain resource of the sensing reference signal, a frequency-domain resource of the sensing reference signal, a spatial domain resource of the sensing reference signal, and a sending mode of the sensing reference signal.

The instructions further enable the second device to: send the related configuration information of the sensing reference signal to a first device.

The related configuration information of the sensing reference signal is pre-configured.

The instructions further enable the second device to: send an encryption algorithm for encrypting the reference signal sequence, to a first device.

The encryption algorithm for encrypting the reference signal sequence is pre-configured.

The instructions further enable the second device to: receive a capability of the first device, where the capability of the first device is used to determine at least one of: the related configuration information of the sensing reference signal, and the encryption algorithm.

The instructions further enable the second device to: report a capability of the second device to the first device.

The first device is a terminal, and the second device is an access network device.

The sensing reference signal is an uplink sensing reference signal, where the uplink sensing reference signal is one of: a channel sounding reference signal (SRS), a demodulation reference signal (DMRS), an uplink data signal for sensing, and an uplink reference signal for sensing.

The first device is an access network device, and the second device is a terminal.

The sensing reference signal is a downlink sensing reference signal, where the downlink sensing reference signal is one of: a channel state reference signal (CSI-RS), a positioning reference signal (PRS), a demodulation reference signal (DMRS), a downlink data signal for sensing, and a downlink reference signal for sensing.

The first device is a radio access point (AP) and the second device is a station (STA); or, the first device is an STA and the second device is an AP.

The sensing reference signal is a physical layer protocol data unit (PPDU).

FIG. 22 is a schematic structural diagram of a chip 2200 according to the embodiments of the present disclosure. The chip 2200 includes a processor 2210, and the processor 2210 may invoke a computer program from a memory and run the computer program, to implement the method in the embodiments of the present disclosure. In a possible implementation, the chip 2200 may further include a memory 2220. The processor 2210 may invoke a computer program from the memory 2220 and run the computer program, to implement the method performed by the access network device or the core network side device in the embodiments of the present disclosure. The memory 2220 may be a separate device independent of the processor 2210, or may be integrated into the processor 2210. In a possible implementation, the chip 2200 may further include an input interface 2230. The processor 2210 may control the input interface 2230 to communicate with other devices or chips, and specifically, to acquire information or data transmitted by other devices or chips. In a possible implementation, the chip 2200 may further include an output interface 2240. The processor 2210 may control the output interface 2240 to communicate with other devices or chips, and specifically, to output information or data to other devices or chips. In a possible implementation, the chip may be applied to each device in the embodiments of the present disclosure, and the chip may implement the corresponding processes implemented by each device in each method of the embodiments of the present disclosure, which will not be repeated here for brevity. It should be understood that the chip mentioned in the embodiments of the present disclosure may also be called a system on chip, a system chip, a chip system or a system-on-chip chip, etc.

The above-mentioned processor may be a general-purpose processor, a digital signal processor, a field programmable gate array, an application specific integrated circuit or other programmable logic devices, transistor logic devices, and discrete hardware components, etc. The above-mentioned general-purpose processor may be a microprocessor or may be any conventional processor, etc. The above-mentioned memory may be a volatile memory or a non-volatile memory, or may include both the volatile memory and non-volatile memory. The non-volatile memory may be a read-only memory, a programmable read-only memory, an erasable programmable read-only memory, an electrically erasable programmable read-only memory or a flash memory. The volatile memory may be a random access memory.

It should be understood that the above-mentioned memory is exemplary but not a limited illustration. For example, the memory in the embodiments of the present disclosure may also be a static random access memory, a dynamic random access memory, etc. That is, the memory in the embodiments of the present disclosure is intended to include, but not be limited to, these and any other suitable types of memory.

FIG. 13 is a schematic block diagram of a communication system 2300 according to the embodiments of the present disclosure. The communication system 2300 includes a first device 2310 and a second device 2320. The above embodiments may be implemented in whole or in part by software, hardware, firmware, or any combination thereof. When the above embodiments are implemented by using software, they may be implemented in the form of a computer program product in whole or in part. The computer program product includes one or more computer instructions. When computer program instructions are loaded and executed on a computer, processes or functions according to the embodiments of the present disclosure are generated in whole or in part. The computer may be a general-purpose computer, a dedicated computer, a computer network, or any other programmable apparatus. The computer instructions may be stored in a computer-readable storage medium or transmitted from one computer-readable storage medium to another computer-readable storage medium, for example, the computer instructions may be transmitted from a website site, computer, server, or data center to another website site, computer, server, or data center via wired (such as coaxial cable, fiber optic, digital subscriber line) or wireless (such as infrared, radio, microwave, etc.) means. The computer-readable storage medium may be any available medium that can be accessed by the computer, or a data storage device, such as including a server or a data center that integrates one or more available media. The available medium may be a magnetic medium (e.g., a hard disk), or a semiconductor medium (e.g., a solid state disk), etc.

It should be understood that, in the various embodiments of the present disclosure, a size of serial numbers of the above processes does not imply an order of execution, and the execution order of the respective processes should be determined by their function and internal logic, but should not constitute any limitation on the implementation processes of the embodiments of the present disclosure.

Those skilled in the art may clearly understand that, for the convenience and brevity of the description, the specific working processes of the systems, apparatus and units described above may refer to the corresponding processes in the above method embodiments, which will not be repeated here.

The above description is only the specific implementation of the present disclosure, but the protection scope of the present disclosure is not limited thereto, and any skilled familiar with this technical field may easily think of changes or substitutions within the technical scope disclosed in the present disclosure, which should be all covered within the protection scope of the present disclosure. Therefore, the protection scope of the present disclosure should be determined based on the protection scope of claims.

**Claims**

1. A communication method performed by a first device, comprising:

    generating a sensing reference signal based on a first reference signal sequence, wherein the first reference signal sequence is obtained by encrypting a reference signal sequence based on a shared key; and
    sending the sensing reference signal, wherein the sensing reference signal is used to obtain sensing measurement data.

2. The method according to claim 1, wherein the first reference signal sequence is obtained by encrypting the reference signal sequence based on a first key, wherein the first key is calculated based on the shared key.

3. The method according to claim 1 or 2, wherein the shared key is a key shared by the first device and a second device, and the second device is a device that receives an echo signal of the sensing reference signal.

4. The method according to claim 3, wherein the shared key is a group key shared by a sensing reception group to which the first device and the second device belong.

5. The method according to claim 3, wherein the shared key is a group key shared by a sensing sending group to which the first device belongs, and the second device.

6. The method according to any one of claims 1 to 5, wherein related configuration information of the sensing reference signal comprises at least one of: a time-domain resource of the sensing reference signal, a frequency-domain resource of the sensing reference signal, a spatial domain resource of the sensing reference signal, and a sending mode of the sensing reference signal.

7. The method according to claim 6, wherein the related configuration information of the sensing reference signal is pre-configured.

8. The method according to claim 6, wherein the method further comprises:
sending the related configuration information of the sensing reference signal to a second device.

9. The method according to any one of claims 1 to 6, wherein an encryption algorithm for encrypting the reference signal sequence is pre-configured.

10. The method according to any one of claims 1 to 6, wherein the method further comprises:
sending an encryption algorithm for encrypting the reference signal sequence, to a second device.

11. The method according to claim 7 or 9, wherein the method further comprises:
reporting a capability of the first device to a second device, wherein the capability of the first device is used to determine at least one of: the related configuration information of the sensing reference signal, and the encryption algorithm.

12. The method according to claim 8 or 10, wherein the method further comprises:
receiving a capability of the second device.

13. The method according to any one of claims 1 to 7, 9 and 11, wherein the first device is a terminal, and a second device is an access network device.

14. The method according to claim 13, wherein the sensing reference signal is an uplink sensing reference signal, wherein the uplink sensing reference signal is one of: a sounding reference signal (SRS), a demodulation reference signal (DMRS), an uplink data signal for sensing, and an uplink reference signal for sensing.

15. The method according to any one of claims 1-6, 8, 10 and 12, wherein the first device is an access network device, and a second device is a terminal.

16. The method according to claim 15, wherein the sensing reference signal is a downlink sensing reference signal, wherein the downlink sensing reference signal is one of: a channel state reference signal (CSI-RS), a positioning reference signal (PRS), a demodulation reference signal (DMRS), a downlink data signal for sensing, and a downlink reference signal for sensing.

17. The method according to any one of claims 1 to 3, wherein the first device is a radio access point (AP) and a second device is a station (STA); or, the first device is an STA and the second device is an AP.

18. The method according to claim 17, wherein the sensing reference signal is a physical layer protocol data unit (PPDU).

19. A communication method performed by a second device, comprising:

receiving an echo signal of a sensing reference signal; and
sending sensing measurement data, wherein the sensing measurement data is obtained based on an encryption reference signal and the echo signal of the sensing reference signal, the encryption reference signal is generated based on a second reference signal sequence, and the second reference signal sequence is obtained by encrypting a reference signal sequence based on a shared key.

20. The method according to claim 19, wherein the second reference signal sequence is obtained by encrypting the reference signal sequence based on a second key, wherein the second key is calculated based on the shared key.

21. The method according to claim 19 or 20, wherein the sensing measurement data is obtained based on a channel estimation value, wherein the channel estimation value is calculated based on the encryption reference signal, and the echo signal of the sensing reference signal.

22. The method according to any one of claims 19 to 21, wherein the shared key is a key shared by a first device and the second device, and the first device is a device that sends the sensing reference signal.

23. The method according to claim 22, wherein the shared key is a group key shared by a sensing reception group to which the first device and the second device belong.

24. The method according to claim 22, wherein the shared key is a group key shared by a sensing sending group to which the first device belongs, and the second device.

25. The method according to any one of claims 19 to 24, wherein related configuration information of the sensing reference signal comprises at least one of: a time-domain resource of the sensing reference signal, a frequency-domain resource of the sensing reference signal, a spatial domain resource of the sensing reference signal, and a sending mode of the sensing reference signal.

26. The method according to claim 25, wherein the method further comprises:
sending the related configuration information of the sensing reference signal to a first device.

27. The method according to claim 25, wherein the related configuration information of the sensing reference signal is pre-configured.

28. The method according to any one of claims 19 to 25, wherein the method further comprises:
sending an encryption algorithm for encrypting the reference signal sequence, to a first device.

29. The method according to any one of claims 19 to 25, wherein the encryption algorithm for encrypting the reference signal sequence is pre-configured.

30. The method according to claim 26 or 28, wherein the method further comprises:
receiving a capability of the first device, wherein the capability of the first device is used to determine at least one of: the related configuration information of the sensing reference signal, and the encryption algorithm.

31. The method according to claim 27 or 29, wherein the method further comprises:
reporting a capability of the second device to a first device.

32. The method according to any one of claims 19 to 26, 28 and 30, wherein the first device is a terminal, and a second device is an access network device.

33. The method according to claim 32, wherein the sensing reference signal is an uplink sensing reference signal, wherein the uplink sensing reference signal is one of: a channel sounding reference signal (SRS), a demodulation reference signal (DMRS), an uplink data signal for sensing, and an uplink reference signal for sensing.

34. The method according to any one of claims 19 to 25, 27, 29 and 31, wherein a first device is an access network device, and the second device is a terminal.

35. The method according to claim 34, wherein the sensing reference signal is a downlink sensing reference signal, wherein the downlink sensing reference signal is one of: a channel state reference signal (CSI-RS), a positioning reference signal (PRS), a demodulation reference signal (DMRS), a downlink data signal for sensing, and a downlink reference signal for sensing.

36. The method according to any one of claims 19 to 22, wherein a first device is a radio access point (AP) and the second device is a station (STA); or, the first device is an STA and the second device is an AP.

37. The method according to claim 36, wherein the sensing reference signal is a physical layer protocol data unit (PPDU).

38. A first device, comprising:

a first processing unit, configured to generate a sensing reference signal based on a first reference signal sequence, wherein the first reference signal sequence is obtained by encrypting a reference signal sequence based on a shared key; and

a first communication unit, configured to send the sensing reference signal, wherein the sensing reference signal is used to obtain sensing measurement data.

39. The first device according to claim 38, wherein the first reference signal sequence is obtained by encrypting the reference signal sequence based on a first key, wherein the first key is calculated based on the shared key.

40. The first device according to claim 38 or 39, wherein the shared key is a key shared by the first device and a second device, and the second device is a device that receives an echo signal of the sensing reference signal.

41. The first device according to claim 40, wherein the shared key is a group key shared by a sensing reception group to which the first device and the second device belong.

42. The first device according to claim 40, wherein the shared key is a group key shared by a sensing sending group to which the first device belongs, and the second device.

43. The first device according to any one of claims 38 to 42, wherein related configuration information of the sensing reference signal comprises at least one of: a time-domain resource of the sensing reference signal, a frequency-domain resource of the sensing reference signal, a spatial domain resource of the sensing reference signal, and a sending mode of the sensing reference signal.

44. The first device according to claim 43, wherein the related configuration information of the sensing reference signal is pre-configured.

45. The first device according to claim 43, wherein the first communication unit is configured to send the related configuration information of the sensing reference signal to a second device.

46. The first device according to any one of claims 38 to 43, wherein an encryption algorithm for encrypting the reference signal sequence is pre-configured.

47. The first device according to any one of claims 38 to 43, wherein the first communication unit is configured to send an encryption algorithm for encrypting the reference signal sequence, to a second device.

48. The first device according to claim 44 or 46, wherein the first communication unit is configured to report a capability of the first device to a second device, wherein the capability of the first device is used to determine at least one of: the related configuration information of the sensing reference signal, and the encryption algorithm.

49. The first device according to claim 45 or 47, wherein the first communication unit is configured to receive a capability of the second device.

50. The first device according to any one of claims 38 to 44, 46 and 48, wherein the first device is a terminal, and a second device is an access network device.

51. The first device according to claim 50, wherein the sensing reference signal is an uplink sensing reference signal, wherein the uplink sensing reference signal is one of: a sounding reference signal (SRS), a demodulation reference signal (DMRS), an uplink data signal for sensing, and an uplink reference signal for sensing.

52. The first device according to any one of claims 38 to 43, 45, 47 and 49, wherein the first device is an access network device, and a second device is a terminal.

53. The first device according to claim 52, wherein the sensing reference signal is a downlink sensing reference signal, wherein the downlink sensing reference signal is one of: a channel state reference signal (CSI-RS), a positioning reference signal (PRS), a demodulation reference signal (DMRS), a downlink data signal for sensing, and a downlink reference signal for sensing.

54. The first device according to any one of claims 38 to 40, wherein the first device is a radio access point (AP) and a second device is a station (STA); or, the first device is an STA and the second device is an AP.

55. The first device according to claim 54, wherein the sensing reference signal is a physical layer protocol data unit (PPDU).

56. A second device, comprising:
a second communication unit, configured to receive an echo signal of a sensing reference signal; and send sensing measurement data, wherein the sensing measurement data is obtained based on an encryption reference signal and the echo signal of the sensing reference signal, the encryption reference signal is generated based on a second reference signal sequence, and the second reference signal sequence is obtained by encrypting a reference signal sequence based on a shared key.

57. The second device according to claim 56, wherein the second reference signal sequence is obtained by encrypting the reference signal sequence based on a second key, wherein the second key is calculated based on the shared key.

58. The second device according to claim 56 or 57, wherein the sensing measurement data is obtained based on a channel estimation value, wherein the channel estimation value is calculated based on the encryption reference signal, and the echo signal of the sensing reference signal.

59. The second device according to any one of claims 56 to 58, wherein the shared key is a key shared by a first device and the second device, and the first device is a device that sends the sensing reference signal.

60. The second device according to claim 59, wherein the shared key is a group key shared by a sensing reception group to which the first device and the second device belong.

61. The second device according to claim 59, wherein the shared key is a group key shared by a sensing sending group to which the first device belongs, and the second device.

62. The second device according to any one of claims 56 to 61, wherein related configuration information of the sensing reference signal comprises at least one of: a time-domain resource of the sensing reference signal, a frequency-domain resource of the sensing reference signal, a spatial domain resource of the sensing reference signal, and a sending mode of the sensing reference signal.

63. The second device according to claim 62, wherein the second communication unit is configured to send the related configuration information of the sensing reference signal to a first device.

64. The second device according to claim 62, wherein the related configuration information of the sensing reference signal is pre-configured.

65. The second device according to any one of claims 56 to 62, wherein the second communication unit is configured to send an encryption algorithm for encrypting the reference signal sequence, to a first device.

66. The second device according to any one of claims 56 to 62, wherein the encryption algorithm for encrypting the reference signal sequence is pre-configured.

67. The second device according to claim 63 or 65, wherein the second communication unit is configured to receive a capability of the first device, wherein the capability of the first device is used to determine at least one of: the related configuration information of the sensing reference signal, and the encryption algorithm.

68. The second device according to claim 64 or 66, wherein the second communication unit is configured to report a capability of the second device to a first device.

69. The second device according to any one of claims 56 to 63, 65 and 67, wherein the first device is a terminal, and a second device is an access network device.

70. The second device according to claim 69, wherein the sensing reference signal is an uplink sensing reference signal, wherein the uplink sensing reference signal is one of: a channel sounding reference signal (SRS), a demodulation reference signal (DMRS), an uplink data signal for sensing, and an uplink reference signal for sensing.

71. The second device according to any one of claims 56 to 62, 64, 66 and 68, wherein a first device is an access network device, and the second device is a terminal.

72. The second device according to claim 71, wherein the sensing reference signal is a downlink sensing reference signal, wherein the downlink sensing reference signal is one of: a channel state reference signal (CSI-RS), a positioning reference signal (PRS), a demodulation reference signal (DMRS), a downlink data signal for sensing, and a downlink reference signal for sensing.

73. The second device according to any one of claims 56 to 59, wherein a first device is a radio access point (AP) and the second device is a station (STA); or, the first device is an STA and the second device is an AP.

74. The second device according to claim 73, wherein the sensing reference signal is a physical layer protocol data unit (PPDU).

75. A first device, comprising: a transceiver, a processor and a memory, wherein the memory is configured to store a computer program, and the processor is configured to call and run the computer program stored in the memory, so that the first device performs the method according to any one of claims 1 to 18.

76. A second device, comprising: a transceiver, a processor and a memory, wherein the memory is configured to store a computer program, and the processor is configured to call and run the computer program stored in the memory, so that the second device performs the method according to any one of claims 19 to 37.

77. A chip, comprising: a processor, configured to call and run a computer program from a memory, so that a device equipped with the chip performs the method according to any one of claims 1 to 18 or claims 19 to 37.

78. A computer-readable storage medium, configured to store a computer program, wherein the computer program, when run by a device, enables the device to perform the method according to any one of claims 1 to 18 or claims 19 to 37.

79. A computer program product, comprising computer program instructions, wherein the computer program instructions enable a computer to perform the method according to any one of claims 1 to 18 or claims 19 to 37.

80. A computer program, wherein the computer program enables a computer to perform the method according to any one of claims 1 to 18 or claims 19 to 37.

<u>**100**</u>

FIG. 1

| | |
|---|---|
| Generate a sensing reference signal based on a first reference signal sequence, where the first reference signal sequence is obtained by encrypting a reference signal sequence based on the shared key | S210 |

| | |
|---|---|
| Send the sensing reference signal, where the sensing reference signal is used to obtain sensing measurement data | S220 |

FIG. 2

| | |
|---|---|
| Receive an echo signal of the sensing reference signal | S310 |

| | |
|---|---|
| Sending sensing measurement data, where the sensing measurement data is obtained based on an encryption reference signal and the echo signal of the sensing reference signal, the encryption reference signal is generated based on a second reference signal sequence, and the second reference signal sequence is obtained by encrypting a reference signal sequence based on a shared key | S320 |

FIG. 3

Base station

Sensing reference signal →

Target

Echo signal of the sensing reference signal ↓

Communication signal

UE

FIG. 4

UE | Sensing target | Base station | Sensing function entity

500: Pre-shared key K

500: Pre-shared key K

501: Sensing service request

502: Sensing capability request

503: Sensing capability reporting

504: Determine a sensing reference signal resource

504: Send a sensing reference signal configuration

505: Generate an encrypted sensing reference signal

505: Send an encrypted sensing reference signal

506: Channel estimation on the generated encryption reference signal and the received echo signal

507: Sensing measurement data

FIG. 5

Reference sequence — Sequence encryption — Modulation mapping — layer mapping — layer — Conversion precoding — Precoding — RE mapping — OFDM symbol generation — Antenna port

Sequence encryption — Modulation mapping — Conversion precoding — RE mapping — OFDM symbol generation

FIG. 6

UE — Sensing reference signal → Target

Communication signal

Echo signal of the sensing reference signal

Base station

FIG. 7

| UE | Sensing target | Base station | Sensing function entity |
|---|---|---|---|

800: Pre-shared key K

800: Pre-shared key K

801: Sensing service request

802: Sensing capability request

803: Sensing capability reporting

804: Determine a sensing reference signal resource

804: Send a sensing reference signal configuration

805: Generate an encrypted sensing reference signal

805: Send an encrypted sensing reference signal

806: Channel estimation on the generated encryption reference signal and the received echo signal

807: Sensing measurement data

FIG. 8

UE

Communication signal

Echo signal

Sensing signal

Target

Base station

Echo signal

Communication signal

UE

FIG. 9

FIG. 10

FIG. 11

**UE**    **Sensing target**    **Base station**    **Sensing function entity**

1200: Group information configuration, including a sensing application ID, a group key K, a group ID, and a group member ID

1202: Group sensing capability request

1201: Group sensing service request

1203: Sensing capability reporting

1204: Determine a sensing reference signal resource

1204: Send a sensing reference signal configuration

1205: Generate an encrypted sensing reference signal

1205: Send an encrypted sensing reference signal

1206: Channel estimation on the generated encryption reference signal and the received echo signal

1207: Sensing measurement data

FIG. 12

**Sensing sending device** → PPDU for Sensing → **Sensing target**

PPDU for Sensing ↓

**Sensing reception device**

Feedback

FIG. 13

| AP | | Sensing target | | STA |
|---|---|---|---|---|

| 1400: Pre-shared key K | | | | 1400: Pre-shared key K |

1401: Sensing service request

1402: Sensing service response

1403: Encrypt the TRN sequence based on K to obtain a TRN1 sequence

1403: Sensing PPDU

1404: Generate TRN1 based on the key K, for channel estimation, to acquire the sensing measurement result

1405: Sensing measurement data

FIG. 14

| Preamble | Data | TRN | TRN | TRN |
|---|---|---|---|---|

Point the sensing receiver to los or the best path

Scan to different regions for sensing

FIG. 15A

Data

| L-STF | L-LTF | L-SIG | SERVICE | PSDU | Tail | Pad bits |
|---|---|---|---|---|---|---|

FIG. 15B

Preamble　　　Signal　　　OFDM data symbol

| Short field | Long field | | Data 1 | …… | …… | …… | …… | Data N |
|---|---|---|---|---|---|---|---|---|

| Preamble (synchronization) (12 symbols) | Signal (1 symbol) | Data or payload (a variable number of OFDM symbols) |
|---|---|---|

| STS (10 short symbols) | LTS (2 long symbols) | Signal (1 symbol) | Data 1 (1 symbol) | …… | DataN (1 symbol) |
|---|---|---|---|---|---|

FIG. 15C

FIG. 16

Target 1   ... ...   Target K

FIG. 17

Sensing initiator        Sensing receiver

Sensing measurement setup

Sensing measurement setup

Sensing measurement instance

Sensing measurement termination

Sensing session termination

Sensing process

FIG. 18

First device

First processing unit 1901      First communication unit 1902

FIG. 19

Second device

Second communication
unit 2001

FIG. 20

Communication device
2100

Memory
2120

Processor
2110

Transceiver
2130

FIG. 21

Chip 2200

Input
interface
2230

Processor
2210

Memory
2220

Output
interface
2240

FIG. 22

Communication system 2300

First device

2310

2320

Second device

FIG. 23

## INTERNATIONAL SEARCH REPORT

| International application No. |
| --- |
| **PCT/CN2023/118039** |

| A. | CLASSIFICATION OF SUBJECT MATTER |
| --- | --- |
| | H04W12/03(2021.01)i |

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; 3GPP; IETF; IEEE: 感知, 测量, 参考信号, 序列, 感知参考信号, 探测, 密钥, 对称, 基站, 用户设备, 加密, 回波, 安全, 攻击, sensing, SRS, CSI-RS, DMRS, PRS, PDSCH, PSK, Reference Signal

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2023038780 A1 (QUALCOMM INC.) 16 March 2023 (2023-03-16) description, paragraphs [0091]-[0225] | 1-80 |
| A | CN 116318250 A (CHINA MOBILE COMMUNICATION CO., LTD., RESEARCH INSTITUTE et al.) 23 June 2023 (2023-06-23) entire document | 1-80 |
| A | WO 2022078452 A1 (VIVO MOBILE COMMUNICATION CO., LTD.) 21 April 2022 (2022-04-21) entire document | 1-80 |
| A | WO 2022127656 A1 (HUAWEI TECHNOLOGIES CO., LTD.) 23 June 2022 (2022-06-23) entire document | 1-80 |
| A | WO 2023159603 A1 (GUANGDONG OPPO MOBILE TELECOMMUNICATIONS CORP., LTD.) 31 August 2023 (2023-08-31) entire document | 1-80 |

☐ Further documents are listed in the continuation of Box C.     ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **07 May 2024** | **10 May 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/118039**

| Patent document cited in search report | | | Publication date (day/month/year) | Patent family member(s) | | | Publication date (day/month/year) |
|---|---|---|---|---|---|---|---|
| WO | 2023038780 | A1 | 16 March 2023 | None | | | |
| CN | 116318250 | A | 23 June 2023 | None | | | |
| WO | 2022078452 | A1 | 21 April 2022 | CN | 114389785 | A | 22 April 2022 |
| WO | 2022127656 | A1 | 23 June 2022 | US | 2023319557 | A1 | 05 October 2023 |
| | | | | EP | 4243468 | A1 | 13 September 2023 |
| WO | 2023159603 | A1 | 31 August 2023 | None | | | |

Form PCT/ISA/210 (patent family annex) (July 2022)